# EUROPÄISCHE PATENTSCHRIFT

(11) **EP 1 400 337 B1**
(45) Veröffentlichungstag und Bekanntmachung des Hinweises auf die Patenterteilung: **22.08.2007**
(21) Anmeldenummer: 02021020.9
(22) Anmeldetag: 20.09.2002
(51) Int. Cl.: B29C 47/76

(54) **Vorrichtung und Verfahren zum Extrudieren von Thermoplasten und Verwendung davon.**
Apparatus and method for extrusion of thermoplastics and use thereof
Dispositif et procédé d'extrusion de matières thermoplastiques et utilisation du dispositif

(43) Veröffentlichungstag der Anmeldung: 24.03.2004
(73) Patentinhaber: BASF Aktiengesellschaft, 67056 Ludwigshafen (DE)
(72) Erfinder: Güntherberg, Norbert, 67346 Speyer (DE); Czauderna, Bernhard, 69493 Hirschberg (DE); Sauer, Michael, 68766 Hockenheim (DE); Bardon, Rainer, 67125 Dannstadt-Schauernheim (DE); An, Yohwan, Ulsan City (KR)
(74) Vertreter: Isenbruck, Günter

(56) Entgegenhaltungen:
- WO-A-98/13412
- CH-A- 512 979
- DE-A- 19 516 082
- GB-A- 668 394
- US-A- 3 371 379
- US-A- 4 110 844
- US-A- 4 491 417
- US-A- 4 578 455
- PATENT ABSTRACTS OF JAPAN vol. 012, no. 152 (M-695), 11. Mai 1988 (1988-05-11) & JP 62 273821 A (KOBE KIKAI KK), 27. November 1987 (1987-11-27) & DATABASE WPI Week 198802 Derwent Publications Ltd., London, GB; AN 1988-010690 & JP 62 273821 A
- PATENT ABSTRACTS OF JAPAN vol. 009, no. 238 (M-416), 25. September 1985 (1985-09-25) & JP 60 092824 A (TOSHIBA KIKAI KK), 24. Mai 1985 (1985-05-24) & DATABASE WPI Week 198527 Derwent Publications Ltd., London, GB; AN 1985-162455 & JP 60 092824 A
- PATENT ABSTRACTS OF JAPAN vol. 010, no. 081 (M-465), 29. März 1986 (1986-03-29) & JP 60 222223 A (IKEGAI TEKKO KK;OTHERS: 01), 6. November 1985 (1985-11-06) & DATABASE WPI Week 198551 Derwent Publications Ltd., London, GB; AN 1985-319746 & JP 60 222223 A

## Beschreibung

Die vorliegende Erfindung betrifft eine Vorrichtung zum Extrudieren von Thermoplasten, die mindestens eine Entgasungsöffnung umfasst. Des Weiteren betrifft die Erfindung ein Verfahren zum Herstellen von Thermoplasten in einer Schneckenmaschine unter mechanischer Entwässerung. Darüber hinaus betrifft die vorliegende Erfindung die Verwendung der Vorrichtung zur Herstellung von ' schlagzäh modifzierten Thermoplasten oder Polymerblends, die schlagzäh modifizierte Thermoplaste enthalten. Weitere bevorzugte Ausführungsformen sind den Ansprüchen und der Beschreibung zu entnehmen.

Die Entgasung und Entwässerung von Thermoplasten mittels Schneckenmaschinen ist bekannt:

So werden in der JP-A 2-286208 drei unterschiedliche Entwässerungsverfahren mittels eines Extruders, der mit zwei Schnecken bestückt ist, offenbart. Dem Extrusionsgut wird jeweils Feuchtigkeit in flüssiger Form und zusätzlich gasförmig über Seihergehäuse entzogen.

Das Dokument JP-A 57167303 beschreibt, dass Extrusionsgut (in diesem Falle z.B. Ausschlämmungen von Polymerteilchen) in einen Zweischneckenextruder dosiert, entwässsert, entgast und geknetet wird. Flussaufwärts von der Kompressionszone kann Wasser in flüssiger Form aus dem Extruder austreten. Restfeuchte kann gasförmig entweichen. Als Entwässerungsöffnungen werden Seihergehäuse verwendet.

Die JP-A 60222223 offenbart ein Verfahren bei dem Extrusionsgut (bevorzugt Lebensmittel aber auch andere Materialien) Wasser in flüssiger Form entzogen wird. Die Entwässerung erfolgt mittels eines Zweischneckenextruders. Der Austrag der Feuchtigkeit erfolgt rückwärts durch eine Öffnung, die gewünschtenfalls an eine Vakuumpumpe angeschlossen ist.

In der WO 98/13412 werden Schneckenmaschinen beschrieben, die mindestens einen Abquetschabschnitt mit mindestens einem Stauelement und einer zugehörigen Entwässerungsöffnung stromaufwärts vor dem ersten Stauelement aufweisen. Darüber hinaus enthalten die Schneckenmaschinen Entgasungsabschnitte, die nach dem Letzten Plastifizierungsabschnitt liegen. Die Entgasungs- und Entwässerungsöffnungen können mit einer Vorrichtung versehen sein, die das Austreten von Extrusionsgut verhindert. Rückhalteschnecken werden als für diesen Zweck bevorzugt beschrieben. Weiter wird beschreiben, dass sich Seihergehäuse oder Siebe nicht dazu eignen, Entwässerungsöffnungen abzudecken, da Seihergehäuse zu schnell verstopfen. Siebe haben darüber hinaus den Nachteil, mechanisch instabil zu sein. Entgasungsöffnungen werden gemäß der WO 98/13412 bevorzugt nicht abgedeckt.

Siebe oder Filter in Extrusionsvorrichtungen dazu zu verwenden, um die Schmelze zu reinigen, war bekannt:

Beispielsweise war aus der US 5,055,244, der EP-A1 229 346 oder der EP-A2 728 510 bekannt, das Extrusionsgut vor dem Spritzgiessen zu Reinigungszwecken durch einen Filter zu pressen. Aus der DE-A1 23 122 war des Weiteren bekannt, dass eine mit einem Panzersieb mit einer Durchlässigkeit von 40 µ abgedeckte Extrusionsöffnung zur Herstellung extrem dünner Fäden verwendet werden kann.

Eine Spritzgussmaschine zum Entgasen hygroskopischer Spritzmaterialien ist in der DE-A1 42 37 174 beschrieben. Die Schnecke läuft in einem Zylinder, dessen Wand mehrlagig aufgebaut ist. Die innere Wand ist aus einem Sintermetall ausgebildet. Dieses ist für den Feuchtigkeitsdampf durchlässig. Der Dampf, der das Sintermetall passiert hat, wird über Kanäle, die sich in der Zylinderwand befinden, abtransportiert. Der Zylinder ist mit einer äußeren Wand als Hülle umgeben.

Aus der CH 512 979 geht eine Extrusionsvorrichtung für Kunststoffe hervor, die auch dem Entwässern der zu behandelnden Materialien dienen kann und die auf einem ähnlichen Prinzip beruht. Das Gehäuse weist eine Sintermetallauskleidung auf. Diese kann aus aneinandergereihten Sintermetallringen bestehen. Jeder dieser Sintermetallringe weist außen einen Ringkanal auf, der zum Abtransport des durch den Sinterring getretenen Gases evakuiert werden kann. Diese Konstruktion hat den Nachteil, sehr aufwendig zu sein.

Rückhalteschnecken verhindern sehr effektiv das Austreten des Extrusionsgutes durch die Entgasungs- bzw. Entwässerungsöffnungen, erfordern aber einen hohen Investitionsaufwand. Da sie bewegliche Teile sind, müssen sie regelmäßig gewartet werden. Auch halten sie meist sehr feinteilige Produktpartikel nicht vollständig zurück.

Seihergehäuse sind mit Flächen aus Lamellenpaketen ausgestattet, die das Extrusionsgut zurückhalten sollen, den Wasserdampf bzw. das Wasser aber durch lange enge Schlitze einer Breite von im Allgemeinen 0,1 bis 1 mm durchlassen. Sie halten das Extrusionsgut zwar zurück, lassen aber feine Feststoffpartikel zu einem unbefriedigt hohem Anteil durch oder verstopfen hierdurch leicht und müssen daher häufig gereinigt werden. Außerdem müssen die feinen durchgelassenen Partikel regelmäßig sorgfältig entfernt werden, da von sehr feinen Partikeln eine Brandgefahr ausgeht.

Innenzylinder von Extrusionsmaschinen aus durchlässigem Material, entweder durchgängig oder in Form von Sinterringen zu fertigen, ist zum einen technisch aufwendig. Zum anderen müssen die Maschinen für die Reinigung komplett abgestellt, die Schnecke gezogen und die Maschine weiter demontiert werden. Oft halten auch derartige technische Anordnungen den in der Vorrichtung auftretenden Drucken nicht hinreichend gut Stand.

Wie dem Stand der Technik zu entnehmen ist, war es nicht bevorzugt, Entgasungs- oder Entwässerungsöffnungen mit herkömmlichen Sieben abzudecken, da diese relativ schnell verstopfen und den mechanischen Beanspruchungen nicht hinreichend gewachsen sind.

Aufgabe der vorliegenden Erfindung war es deshalb, eine Vorrichtung der oben genannten Art zur Verfügung zu stellen, die die genannten Nachteile nicht aufweist. Insbesondere sollte eine Vorrichtung gefunden werden, mittels der weniger als 1 g Feinpartikel pro 1 kg des an der jeweiligen Öffnung vorbeigeführten Extrusionsgutes durch die Entgasungsöffnungen austretenden Gase ausgetragen wird. Ziel war es ferner, dass die Vorrichtung, mittels derer das Austreten von Extrusionsgut aus den Entgasungsöffnungen verhindert werden sollte, eine hohe mechanische Festigkeit haben, leicht zu reinigen sein und möglichst geringe Investitionskosten erfordern sollte.

Demgemäss wurde eine Vorrichtung nach Anspruch 1 zum Extrudieren von Thermoplasten gefunden, die mindestens eine Entgasungsöffnung umfasst, worin die Entgasungsöffnung mit einer Metalldrahtgewebe-Verbundplatte ("MVP") ausgerüstet ist.

Als Thermoplaste können alle hochmolekularen oder oligomeren Verbindungen verwendet werden, die bei Erhöhung der Temperatur nach Überschreiten ihrer Glasübergangstemperatur weich werden. Hierunter können Kunststoffe, Naturprodukte oder Pharmaka fallen. Thermoplaste sind dem Fachmann bekannt. Daher sind an dieser Stelle nur beispielhaft Polyamide, Polycarbonate, Styrolpolymere, Derivate, Copolymeren oder Mischungen dieser Polymeren genannt. Zu den Styrolcopolymeren zählen z.B. Styrol/Acrylnitrilcopolymere, oft auch bezeichnet als SAN-Polymere, kautschukmodifizierte Styrolcopolymere wie Acrylnitril/Butadien/Styrolcopolymere, oft auch bezeichnet als ABS, Acrylnitril/Acrylat/Styrolcopolymere, oft auch bezeichnet als ASA. Daneben kommen auch Derivate oder Varianten von SAN-Polymeren, ABS oder ASA in Betracht, wie solche auf der Basis von alpha-Methylstyrol oder Methacrylat oder solche die weitere Comonomere umfassen, beispielsweise das sogenannte MABS. Selbstverständlich können auch Mischungen von zwei oder mehreren unterschiedlichen Styrolcopolymerisaten eingesetzt werden. Des weiteren kommen kautschukmodifizierte Styrolcopolymere in Betracht, die ganz oder teilweise auf anderen Kautschuken basieren wie Ethylen-Butadienkautschuken oder Silikonkautschuken. Bevorzugt werden auch Mischungen der genannten Polymere mit Polyamiden, Polybutylenterephthalaten und/oder Polycarbonaten. Weitere Thermoplaste werden unten im Einzelnen aufgeführt.

Als erfindungsgemäße Vorrichtung ist an sich jede Schneckenmaschine geeignet, die mindestens eine Entgasungsöffnung umfasst und mittels derer Thermoplasten extrudiert werden können. Hierunter sollen auch Schneckenmaschinen verstanden werden, die in der Verarbeitung wie dem Spritzguss eingesetzt werden. Schneckenmaschinen sind an sich bekannt, so dass hier auf die allgemein zugängliche Literatur verwiesen werden kann. So können beispielsweise Schneckenmaschinen eingesetzt werden, wie sie aus den oben genannten Dokumenten bekannt sind. Im Allgemeinen umfassen Schneckenmaschinen mindestens einen Dosierabschnitt, mindestens einen Plastifizierungsabschnitt und eine Austragszone.

Im Allgemeinen richtet sich die Anzahl, Anordnung und Ausgestaltung der Entgasungsöffnungen nach der Menge des Gases das die Schneckenmaschine verlassen soll. Beispielsweise richtet sich die Anzahl, Anordnung und Geometrie der Entgasungsöffnungen bei der Extrusion Wasser enthaltender Thermoplaste nach dem Wassergehalt des Thermoplasten und dem gewünschten Restwassergehalt des Endproduktes.

Erfindungsgemäß weisen die Schneckenmaschinen mindestens eine Entgasungsöffnung auf. Sie können aber auch mehrere Entgasungsöffnungen aufweisen. Beispielsweise können sie zwei oder drei Entgasungsöffnungen umfassen. Es ist aber auch möglich, dass die Schneckenmaschinen sehr viel mehr, beispielsweise bis zu 30, Entgasungsöffnungen aufweisen.

Die Entgasungsöffnungen können sich an der Oberseite des Gehäuses der Schneckenmaschine befinden. Sie können aber auch eine seitliche oder nach unten weisende Anordnung haben. Auch ist es z.B. möglich die Entgasungsöffnungen paarweise gegenüberliegend seitlich oder paarweise oben und unten liegend anzuordnen. Ferner kann eine Kombination der genannten Anordnungen in Betracht kommen. Beispielsweise kann die Entgasungsöffnung jeweils einzeln nebeneinanderliegend oder übereinanderliegend angeordnet sein. Es kommt jedoch auch in Betracht, dass mehrere Entgasungsöffnungen nebeneinaderliegend oder übereinanderliegend angeordnet sind.

Die Anzahl und die Position der Entgasungsöffnungen richtet sich nach den jeweiligen Aufgaben.

In der Regel erfolgt die Entgasung mit der Förderrichtung stromabwärts von der Dosierzone bzw. der Dosier- und der Aufschmelzzone, d.h. vorwärts. Die Entgasung kann aber auch entgegen der Förderrichtung stromaaufwärts, d.h. rückwärts zur Dosierzone erfolgen. Im einfachsten Fall liegt nur eine Entgasungsöffnung vor, die stromauf oder stromab einer Dosierzone angeordnet sein kann. Falls es mehrere Dosierzonen gibt, kann die Entgasung stromauf oder stromab zu jeder dieser Dosierzonen erfolgen.
Die Entgasungsöffnungen können in an sich bekannter Weise ausgestaltet sein und in ihrer Geometrie bekannten Öffnungen entsprechen, wie sie üblicherweise zum Entfernen gasförmiger Stoffe aus einem Extruder verwendet werden. So können Entgasungsöffnungen verwendet werden, die Aussparungen und/oder Bohrungen im Extruderzylinder (Extrudergehäuse) sind. Als Entgasungsöffnungen sind beispielsweise kreisförmige Bohrungen oder Bohrungen im Form einer liegenden Acht (also zwei direkt nebeneinanderliegende kreisförmige Bohrungen) geeignet, wobei die Längsachse der liegenden Acht beispielsweise rechtwinklig (quer) oder parallel (längs) zur Förderrichtung des Extruders angeordnet sein kann. Eine andere bevorzugte Ausgestaltung der Entgasungsöffnungen ist rechteckig, quadratisch oder oval, seitlich, oben oder unten. Dabei können die quadratischen oder rechteckigen Öffnungen mit abgerundeten Ecken ausgeführt sein. Sofern mehr als eine Entgasungsöffnung verwendet wird, ist es auch möglich, dass deren Geometrien unterschiedlich ist. Besonders bevorzugt sind die rechteckigen oder ovalen Entgasungsöffnungen so angeordnet, dass deren längere Seite parallel zur Achse des Extruders liegt. Im Fall, dass die Entgasungsöffnungen oben oder unten liegen, reichen die Öffnungen gemäß einer Ausführungsform über alle Schnekken, beispielsweise über beide Schnecken einer Zweischneckenmaschine, so dass beide Schnecken sichtbar wären. Es ist aber auch möglich, dass eine der Schnecken, ganz oder teilweise abgedeckt ist, so dass nur eine Seite entgast wird. Alternativ kann die Entgasungsöffnung so angeordnet sein, dass sie nicht eng anliegt, so dass zwar alle Schnecken entgast werden, aber die Ableitung des Gases nur über die nicht abgedeckte Schnecke geschieht. Sofern die Druckverhältnisse dies zulassen kann die Entgasungsöffnung auch zylindrisch rundumlaufend angeordnet sein.

Erfindungsgemäß ist die Entgasungsöffnung mit einer Metalldrahtgewebe-Verbundplatte ("MVP") ausgerüstet.

Sofern die Vorrichtung mehr als eine Entgasungsöffnung aufweist, ist mindestens eine davon derart ausgerüstet. In einer Ausführungsform sind alle Entgasungsöffnungen auf diese Weise ausgerüstet. Nach einer anderen bevorzugten Ausführungsform sind einige Entgasungsöffnungen so ausgerüstet und die restlichen Entgasungsöffnungen entweder offen oder mit anderen Vorrichtungen versehen, die das Austreten des Fördergutes verhindern. Als solche kann z.B. eine Rückhalteschnecke dienen. So kann die Entgasungsöffnung oder die Entgasungsöffnungen, an denen die Gasaustrittgeschwindigkeit am größten ist, jeweils mit einer MVP ausgerüstet sein, während die Entgasungsöffnung oder die Entgasungsöffnungen, an denen nur wenig Fördergut austritt, offen sein können. Auch kann es vorteilhaft sein, die Entgasungsöffnungen, bei denen verfahrensbedingt hohe Drucke auftreten können, mit einer MVP, auszustatten, wobei die MVP austrittsseitig mit einer Druckhaltung versehen ist.

Die MVP ist vorzugsweise in ihrer Geometrie derjenigen der Entgasungsöffnung angepasst. So kann er kreisförmig sein, die Form einer liegenden Acht aufweisen, rechteckig, quadratisch oder oval sein.

Die MVP kann auf unterschiedlichste Weise in der Entgasungsöffnung befestigt sein. Bevorzugt wird die jeweilige der genannten Vorrichtungen in einen stabilen Rahmen eingeschweißt, eingelötet oder eingepresst. Der Rahmen kann dann in entsprechende Aussparungen eines Verdrängers in der Entgasungsöffnung eingeklemmt, eingesteckt oder eingeschraubt werden. Auch die klappbare Anbringung ist möglich, wobei eine Seite des Rahmens mit einem fest angebrachten Schanier oder einer vergleichbaren Vorrichtung versehen ist. Eine variable Anbringung, beispielsweise klappbar, steckbar, schraubbar, klick-in, mittels eines Bajonettverschlusses hat den Vorteil, dass entsprechend vorgefertigte Rahmen schnell gewechselt werden können. Hierdurch wird die Reinigung, Wartung oder Inspektion erleichtert, aber auch Maschinenanpassung aufgrund von z.B. Produktwechsel.

Die MVP kann in der Entgasungsöffnung derart angebracht sein, dass seine Oberfläche plan mit der Innenwand des Extruderzylinders (Extrudergehäuses) abschließt. Im Allgemeinen ragt die Oberfläche des MVP, Feinlochbleches oder der Schlitzlochblende nicht mehr als das Spiel zwischen Schnecke und Wand in das Extruderinnere hinein. Dadurch wird verhindert, dass weder die Schnecke noch die MVP beschädigt werden. Weiterer Vorteil einer solchen Ausgestaltung ist, dass Ablagerungen vor der MVP oder ständiges Ankleben von Extrusionsgut verhindert wird.

Nach einer anderen Ausführungsform kann es zweckmäßig sein, die MVP etwas zurückversetzt von der Schnecke anzubringen. Hierdurch wird der mechanische Kontakt zwischen Schnecke und MVP, Feinlochblech oder Schlitzlochblende vermieden. Allerdings kann es bei dieser Art der Anbringung erforderlich sein, Vorsorge dafür zu treffen, dass sich keine Ablagerungen von Resten von Extrusionsgut in den vorhandenen Totvolumina bilden. Eine zurückversetzte Anbringung kann dann besonders vorteilhaft sein, wenn z.B. die Entgasungsöffnung oben liegt und insbesondere sich im Dosierbereich befindet und pulverförmiges Exrusionsgut vorliegt. Wenn diesem ein gewisses Volumen bei der Entgasung gewährt wird, kann es in den Schneckengang zurückfallen.

Sofern die Oberfläche der MVP plan mit der Innenseite des Extrudergehäuses ist, hat sie vorzugsweise die selbe Wölbung wie der Extruderzylinder. Es ist aber auch möglich, dass die Oberfläche des MVP, des Feinlochbleches oder der Schlitzlochblende eine andere Wölbung aufweist. So kann es günstig sein, dass die Oberfläche nach innen oder außen gewölpt ist oder gänzlich eben ist. Nach einer besonders bevorzugten Ausführungsform ist sie der Schnecke entsprechend gewölbt, so dass die Schnecke der Wölbung der Oberfläche folgend, diese regelmäßig abkämmen kann. Bei der Position der Entwässerungsöffnung im Zwickelbereich von zwei Schnecken kann es beispielsweise vorteilhaft oder notwendig sein, die Form der Oberfläche derart anzupassen, dass sie einer der Länge nach durchgeschnittenen liegenden Acht entspricht.

Die MVP kann ein Drahtgewebe aufweisen, dass z.B. glatt ist oder Leinenbindung aufweist. Es ist möglich, dass das Drahtgewebe quadratische Maschenform hat oder Körperbindung aufweist. Es kann sich aber auch um Tressengewebe mit glatter oder Leinenbindung, eine Körpertresse oder Panzertresse handeln. Mechanisch sehr stabil und daher bevorzugt sind mehrlagig aufgebaute Drahtgewebe aus zwei oder drei oder mehr, beispielsweise bis zu 30 Lagen, bevorzugt 2 bis 10 Lagen. Bevorzugt werden dabei MVP, die eine grob gewebte, großmaschige aber mechanisch stabile Trägerschicht (Stützgewebe) haben und darauf aufbauend immer engermaschigere und feiner gewebte Zwischen- und Filterschichten aufweisen. Für die meisten Anwendungen ist es bevorzugt, dass das feinste Gewebe sich auf der produktzugewandten Seite befindet. Die Maschenweiten für dieses feinste Gewebe können beispielsweise von 1 µm bis 500 µm betragen. Im Allgemeinen liegen die Maschenweiten der Trägerschicht deutlich darüber und können bis mehrere Millimeter betragen. Geringere Maschenweiten für das feinste Gewebe sind ebenfalls möglich, beispielsweise, wenn besonders feine Partikel zurückgehalten werden sollen. Die Webart kann für alle Lagen gleich sein. Es ist aber auch möglich, dass die Webart für einige Lagen gleich ist und sich dann ändert oder sich von Lage zu Lage ändert. Webart und die Anzahl der Lagen richten sich nach der jeweiligen Aufgabe, insbesondere nach der benötigten mechanischen Festigkeit, den Druckverhältnissen oder der Trennaufgabe. Um die mechanische Festigkeit der MVP zu erhöhen, können die einzelnen Drahtgewebe miteinander versintert sein. Diese Ausführungsform ist bevorzugt. MVP sind an sich bekannt und werden beispielsweise im Handel für Schmelzefiltrationszwecke oder als Anströmboden für Wirbelschichtreaktoren angeboten. Sie können aber auch aus an sich bekannten Teilen gefertigt werden.

Die erfindungsgemäß einsetzbaren Feinlochblenden sind fein gelochte Bleche mit Lochweiten von beispielsweise 0,06 bis 4 mm. Sie können auch mit einem Drahtgewebe der oben angegebenen Art kombiniert sein, wobei das Feinlochblech im Allgemeinen als Trägermaterial und das Drahtgewebe als Filtermaterial dient. Umgekehrt ist es aber auch möglich ein grobes Drahtgewebe als Träger und ein sehr fein gelochtes Blech als Filterschicht zu verwenden. Feinlochblenden sind an sich bekannt und im Stand der Technik für Siebzentrifugen oder Schleudern eingesetzt.

Schlitzlochblenden, die erfindungsgemäß verwendet werden können, weisen schlitzförmig verlaufende Öffnungen auf und unterscheiden sich von Seihergehäusen insbesondere dadurch, dass sie keine durchgehenden Schlitze aufweisen sondern eine Vielzahl diskreter Öffnungen. Dabei können die Öffnungen prinzipiell in jedem Winkel in Bezug auf die Schneckenachse angeordnet sein, beispielsweise parallel zur Achse der Schnecke verlaufen. Die Öffnungen können aber auch eine andere Verlaufsrichtung in Bezug auf die Achse der Schnecke, bzw. der Schnecken, aufweisen. Nach einer der bevorzugten Ausführungsformen verlaufen die Öffnungen der Schlitzlochblende quer zur Achse der Schnecke, insbesondere ist ihre Verlaufsrichtung 90°C in Bezug auf die Achse der Schnecke bzw. den Schnecken. Die Öffnungen Können einheitlich groß sein. Ihre Größe kann aber auch variieren. Das Längenverhältnis der längeren bzw. kürzeren Achse der Öffnungen kann beispielsweise im Bereich von 60:1 bis 2:1, bevorzugt 50:1 bis 4:1 betragen. Die kürzere der Achsen der Öffnungen kann z.B. von 0,05 bis 0,1 mm, bevorzugt 0,05 bis 0,09 mm lang sein. Die kürzere der Achsen der Öffnungen kann bei mehrlagigen Schlitzlochblenden auch länger sein, beispielsweise bis zu 0,5 mm lang sein, wobei Schlitzlochblenden mit diesen größeren Öffnungen, die Lage oder die Lagen mit den größeren Öffnungen bevorzugt auf der von dem Fördergut abgewandten Seite aufweisen. Derartige Schlitzlochblenden sind an sich bekannt und werden im Stand der Technik in Siebschleudern, Zentrifugen oder Wirbelschichttrocknern eingesetzt.

Die Werkstoffe aus denen MVP, Feinlochblende oder Schlitzlochbleride gefertigt sind, richten sich nach dem Anwendungszweck. In der Regel handelt es sich um verzinkte oder verzinnte unlegierte Stähle, NiC(-Kohlenstoff)-Stähle, Cr-Stähle, nichtrostende Stähle wie martensitische oder austenistische Stähle der Werstoffgruppen 1.43 (CrNi-Stähle) oder 1.44 (CrNiMo-Stähle). Es kommen aber auch hochhitzebeständige Stähle in Betracht sowie solche aus Kupfer-, Nickel-, Titan- oder Aluminiumlegierungen. Für die Extrusion von Naturstoffen für den Lebensmittelsektor oder für Extrusionen im Arzneimittelbereich, kann es erforderlich sein, Edelmetall wie Silber zu verwenden. Es ist auch möglich, dass polierte, insbesondere glatte bis spiegelglatte metallische Materialien eingesetzt werden. Auch sind metallische Oberflächen denkbar, die den sogenannten Lotuseffekt aufweisen. Für Ausnahmefälle im Niedrigtemperaturbereich können auch Kunststoffe zur Anwendung kommen. Die meisten Anwendungen können mit den Werkstoffgruppen 1.40 bis 1.45 abgedeckt werden, worunter Chrom-Nickel-Molybdän-Stähle am häufigsten eingesetzt werden.

Mittels des Einsatzes der MVP werden feine Feststoffpartikel sehr wirksam zurückgehalten, so dass nach außen im Wesentlichen nur Gas, z.B. Wasserdampf, austritt.

Die MVP, das Feinlochblech oder die Sieblochblende können einfach durch Rückspülen, abbürsten oder ausglühen gereinigt werden, da im Allgemeinen im Wesentlichen keine Tiefenbeladung innerhalb der Gewebeschichten auftritt.

Nach einer besonders bevorzugten Ausführungsform ist die erfindungsgemäße Vorrichtung ein Extruder mit mindestens zwei gleichsinnig oder gegensinnig rotierenden Schnecken, wobei der Extruder in Förderrichtung (stromabwärts) im wesentlichen aus
- mindestens einem Dosierabschnitt, in den mittels einer Dosiereinrichtung Wasser enthaltender Thermoplast dem Extruder zugeführt wird,
- gewünschtenfalls mindestens einem der Entwässerung des Thermoplasten dienenden Abquetschabschnitt, der mindestens ein Stauelement, sowie jeweils mindestens eine zugehörige Entwässerungsöffnung enthält, die gewünschtenfalls mit einer MVP, einem Feinlochblech oder einer Schlitzlochblende ausgerüstet sein kann,
- gewünschtenfalls mindestens einem Zuführabschnitt, in dem weiterer Thermoplast als Schmelze in den Extruder eingeführt wird,
- mindestens einem mit Durchmischungs-, Knet- und/oder anderen Plastifizierungselementen versehenen Plastifizierungsabschnitt,
- mindestens einem mit mindestens einer Entgasungsöffnung versehenen Entgasungsabschnitt, in dem das restliche Wasser als Dampf entfernt wird, wobei mindestens eine der Entgasungsöffnungen mit einer MVP, einem Feinlochblech oder einer Schlitzlochblende ausgerüstet ist und
- einer Austragszone.

Darunter bevorzugt sind Extruder, die mindestens einen Zuführabschnitt aufweisen. Des weiteren sind unter den genannten Extrudern solche bevorzugt, die mindestens einen Abquetschabschnitt umfassen. Zu den besonders bevorzugten Extrudern zählen diejenigen, die sowohl mindestens einen Zuführ- als auch mindestens einen Abquetschabschnitt umfassen. Die erfindungsgemäße Vorrichtung kann dazu eingesetzt werden, um einen Thermoplasten zu extrudieren, der entgast und dabei entwässert werden kann. Es ist auch möglich eine Mischung aus Wasser und Thermoplasten, z.B eine Aufschlämmung von Thermoplast in Wasser, der Vorrichtung zuzuführen und zu extrudieren. In diesem Fall beträgt der Wassergehalt der Thermoplasten beispielsweise bis zu 90 Gew.-%. Ebenso ist es möglich eine Mischung unterschiedlicher. Thermoplaste zu extrudieren. Erfindungsgemäß kann die Vorrichtung auch dazu dienen, einen Thermoplasten aus einer wasserfeuchten, bis zu 60 Gew.-% Restwasser enthaltenden Komponente herzustellen, indem man diese Komponente der Vorrichtung zuführt, zumindest teilweise entwässert mit weiteren Komponenten vermischt und anschließend den Thermoplasten austrägt. So werden bevorzugt schlagzäh modifizierte Thermoplaste oder schlagzäh modifizierte Thermoplaste enthaltende Polymerblends hergestellt.

Nach einer bevorzugten Ausführungsform kann die erfindungsgemäße Vorrichtung zur Herstellung von schlagzäh modifizierten Thermoplasten oder schlagzäh modifizierte Thermoplaste enthaltende Polymerblends eingesetzt werden, die durch Vermischen mindestens einer wasserfeuchten, bis zu 60 Gew.-% Restwasser enthaltenden Elastomerkomponente A mit mindestens einem thermoplastischen Polymeren B sowie weiteren Polymeren C und Zusatzstoffen D in einer Schneckenmaschine unter mechanischer Entwässerung der Elastomerkomponente A.

Im folgenden wird eine besonders bevorzugte Vorrichtung und ein besonders bevorzugtes Verfahrensprinzip näher erläutert. Die als Abschnitte bzw. Zonen bezeichneten Bestandteile der Vorrichtung sind nicht notwendigerweise identisch sind mit den einzelnen Bauteilen wie Gehäuseteilen, Schneckensegmenten, aus denen die Vorrichtung montiert ist. Ein Abschnitt bzw. eine Zone besteht in der Regel aus mehreren Bauteilen.

In einer bevorzugten Ausführungsform ist die Vorrichtung ein Zweischneckenextruder. Jedoch kann auch ein Extruder mit 3 oder mehr Schnecken, oder auch ein Extruder mit einer Hauptschnecke großen Durchmesser und darum herum angeordneten kleinen Schnecken (Planeten-Anordnung) verwendet werden.

Weiterhin rotieren die Schnecken des Extruders bevorzugt gleichsinnig. Jedoch ist auch die gegensinnige Rotation möglich, Besonders bevorzugt wird ein Zweischneckenextruder mit gleichsinnig rotierenden Schnecken eingesetzt.

Die wasserfeuchte, bis zu 60 Gew.-% Restwasser enthaltende Elastomerkomponente A, ist in der Regel ein feuchter Feststoff. Es handelt sich beispielsweise um einen Pfropfkautschuk, der durch Emulsionspolymerisation gewonnen, ausgefällt und auf bis zu 60 Gew.-% Restwassergehalt teilentwässert wurde - wobei die Teilentwässerung z.B. durch Filtrieren, Sedimentieren, Auspressen, Dekantieren, Zentrifugieren oder thermische Trocknung erfolgen kann -, wird dem Dosierabschnitt des Extruders zugeführt. Der Dosierabschnitt besteht üblicherweise aus einer automatisch arbeitenden Dosiereinrichtung und der eigentlichen Dosieröffnung. Die Dosiereinrichtung ist beispielsweise als Förderschnecke ausgebildet, die das Fördergut in die Dosieröffnung fördert oder drückt. Ebenso ist denkbar, dass die Komponente A durch geeignete gravimetrische oder volumetrische Dosiereinrichtungen dosiert und im freien Fall in die Einzugsöffnung des Extruders dosiert wird. Mittels einer geeigneten Schneckengeometrie im Dosierabschnitt wird erreicht, dass die Komponente A eingezogen und entlüftet wird. Die Entlüftung kann durch eine oder mehrere, stromauf oder stromab zur Dosierungsöffnung angeordnete Öffnungen erfolgen, die entweder unverschlossen oder durch eine MVP, einem Feinlochblech oder einer Schlitzlochblende verschlossen ist.

Im Falle mehrerer Elastomerkomponenten A können diese gemeinsam oder getrennt voneinander in die gleiche Dosieröffnung oder in verschiedene Dosieröffnungen des Dosierabschnittes 2 dosiert werden.

In einer möglichen Ausführungsform befindet sich ein Abschnitt 1 stromaufwärts entgegen der Förderrichtung des Extruders. Er kann der Entwässerung, bevorzugt der Drainage, und/oder der Entlüftung dienen. Er weist typischerweise eine oder mehrere Entlüftungsöffnungen auf, durch die eingeschlossene Luft entweichen kann. Zusätzlich kann er eine oder mehrere Entwässerungöffnungen aufweisen, die bevorzugt der Drainage dienen. Erfindungsgemäß können eine, mehrere oder alle dieser Entwässerungsöffnungen mit einer MVP, einem Feinlochblech oder einer Schlitzlochblende ausgerüstet sein. Nach einer der bevorzugten Ausführungsformen kann man eine MVP verwenden.

In einer weiteren Ausführungsform wird in eine oder mehrere weitere, am Entlüftungsabschnitt angeordnete Öffnungen, die Komponente C und/oder die Komponente D, bzw. Anteile der insgesamt zugegebenen Menge der Komponenten C und/oder D, eindosiert. Werden beide Komponenten C und D zugeführt, so kann dies gemeinsam durch eine Öffnung oder durch verschiedene Öffnungen (je eine für C bzw. D) geschehen.

In einer anderen, bevorzugten Ausführungsform wird in die Dosieröffnung des Dosierabschnittes oder in eine oder mehrere weitere, am Dosierabschnitt angeordnete Öffnungen, die Komponente C und/oder die Komponente D, bzw. Anteile der insgesamt zugegebenen Menge der Komponenten C und/oder D, eindosiert. Dies kann auch in einem weiteren Dosierabschnitt 2' erfolgen, der dem ersten Dosierabschnitt 2 nachfolgt und für den im wesentlichen die zum Abschnitt 2 gemachten Ausführungen gelten. Der Dosierabschnitt 2 und/oder die weiteren Dosierabschnitte 2' können erfindungsgemäß mit einer oder mehreren Entwässerungsöffnungen ausgestattet sein, die ebenfalls bevorzugt der Drainage dienen. Diese können erfindungsgemäß mit einer MVP, einem Feinlochblech oder einer Schlitzlochblende ausgerüstet sein, wobei eine MVP bevorzugt wird.

Die Komponenten C und D können in den Dosierabschnitten getrennt von A oder zusammen mit A in einer der folgenden Kombinationen dem Extruder zugeführt werden: A+C+D, A/C+D, A+C/D, A+D/C, A/C/D (wobei / "getrennt von" mittels je einer separaten Öffnung und + "zusammen mit" durch eine gemeinsame Öffnung bedeutet).

Die Dosiereinrichtung für die Komponenten C und/oder D kann in beiden genannten Ausführungsformen je nach Aggregatzustand von C und D beispielsweise eine Förderschnecke wie bei der Dosierung der Elastomerkomponente A, eine Pumpe oder auch ein Extruder sein.

Im Bereich der Dosierabschnitte und - sofern vorhanden - im Entlüftungsabschnitt sind die Extruderschnecken in der Regel als übliche Förderschnecken ausgebildet. Übliche Förderschnecken im Sinne dieser Anmeldung sind Elemente mit "Erdmenger"-Profil (vollständig selbstreinigend), Schubkantenelemente, Elemente mit Trapezprofil und Elemente mit Rechteckprofil, Schneckenelemente mit Fördergewinden großer Steigung (Steigung größer ein Schneckendurchmesser) in Förderrichtung (sog. RGS-Elemente), oder Kombination dieser Elemente, wobei die Schnecken auch abweichend von der Gangzahl des Abquetschteils mit geringerer oder höherer Gangzahl ausgestattet sein können. Hier können auch zwei- und eingängige oder zwei- oder dreigängige Schneckenelemente gemeinsam zur Anwendung kommen. Die Schneckenelemente der Förderschnecke können in den genannten Abschnitten gleich oder verschieden sein.

Die wasserfeuchte Elastomerkomponente wird stromabwärts in den ersten Abquetschabschnitt gefördert.

Im ersten Abquetschabschnitt 3 wird ein Teil des in der Elastomerkomponente enthaltenen Restwassers mechanisch entfernt. Das Material wird gegen ein als Hindernis wirkendes Stauelement gefördert, welches sich in der Regel am Ende des Abquetschabschnitts befindet. Hierdurch wird ein Druck aufgebaut, der das Wasser aus der Elastomerkomponente auspreßt. Man kann den Druck je nach dem rheologischen Verhalten des Kautschuks durch unterschiedliche Anordnung von Schnecken-, Knetelementen oder anderen Stauelementen aufbauen. Grundsätzlich sind alle handelsüblichen, dem Druckaufbau dienenden Vorrichtungselemente geeignet.

Beispielsweise seien als mögliche Stauelemente
- überschobene, fördernde Schneckenelemente
- Schneckenelemente mit Steigung entgegen der Förderrichtung, wozu auch Schneckenelemente mit Fördergewinden großer Steigung (Steigung größer ein Schneckendurchmesser) entgegen der Förderrichtung (sog. LGS-Elemente) zählen
- Knetblöcke mit nichtfördernden Knetscheiben in unterschiedlicher Breite
- Knetblöcke mit rückfördernder Steigung
- Knetblöcke mit fördernder Steigung
- Zylinderscheiben, Exzenterscheiben und daraus konfigurierte Blöcke
- Zahnmischelemente (sog. ZME) verschiedener Bauart
- neutrale Stauscheiben ("Drosselscheiben")
- mechanisch verstellbare Drosseln (Schiebegehäuse, Radialdrosseln, Zentraldrosseln)
genannt.

Es können auch zwei oder mehrere der Stauelemente miteinander kombiniert werden. Gleichfalls kann die Stauwirkung durch die Länge und die Intensität der einzelnen Stauelemente dem jeweiligen Elastomeren angepaßt werden.

Im Abquetschabschnitt sind die Schneckenelemente, die sich vor der Stauzone (vor dem ersten Stauelement) befinden, in der Regel als übliche Förderschnecken ausgebildet. In einer Ausführungsform werden hier Förderschnecken verwendet, deren Steigungswinkel in Richtung auf die Stauzone flacher wird. Diese Ausgestaltung bewirkt einen vergleichsweise langsamen Durckaufbau - man spricht von einer Kompressionszone -, wie er zur Entwässerung bestimmter Elastomerkomponenten vorteilhaft sein kann.

In einer anderen bevorzugten Ausführungsform werden im Abquetschabschnitt zwischen der Entwässerungsöffnung und dem ersten Stauelement Durchmischelemente und/oder Knetelemente, wie sie weiter unten für den Plastifizierungsabschnitt 5 beispielhaft genannt werden, eingesetzt. Diese Ausführungsform kann insbesondere für bestimmte Konsistenzen und Morphologien der Elastomerkomponente vorteilhaft sein.

Im ersten Abquetschabschnitt sind bevorzugt sämtliche konstruktiven Merkmale und alle Betriebsparameter des Extruders derart aufeinander abgestimmt, daß bei der gewählten Schneckendrehzahl das Elastomermaterial zwar gefördert und komprimiert, jedoch nicht oder lediglich in untergeordnetem Maße plastifiziert oder angeschmolzen und nicht aufgeschmolzen wird.

Bevorzugt enthält der Abquetschabschnitt 3 des Extruders zum Druckaufbau Schneckenelemente mit einer Steigung entgegen der Förderrichtung und/oder entsprechende Knetblöcke.

Das im ersten Abquetschabschnitt aus dem Elastomermaterial ausgepreßte Wasser verläßt den Extruder in flüssiger Phase und nicht als Dampf. In einer weniger bevorzugten Ausführungsform treten bis zu 20 Gew.-% des in diesem Abschnitt entfernten Wassers als Dampf aus.

Der Abquetschabschnitt ist mit einer oder mehreren, im Regelfall unter Normaldruck oder Überdruck stehenden Entwässerungsöffnungen versehen. Deren Anzahl, Anordnung und Ausgestaltung richtet sich im Allgmeinen nach dem Wassergehalt des Extrusionsgutes und dem gewünschten Restwasseranteil im Endprodukt. Die Entwässerungsöffnungen befinden sich bevorzugt etwa in der Mitte des Abquetschabschnittes. Die Entwässerungsöffnungen können sich z.B. an der Oberseite des Extruders befinden, aber auch eine seitliche oder nach unten weisende Anordnung haben. So können eine oder mehrere Entwässerungsöffnungen senkrecht zur Extruderachse auf einer gedachten Kreisanordnung um die Extruderachse angeordnet sein. Möglich sind ferner Entwässerungsöffnungen nach oben, unten oder beidseitig der Extruderachse. Auch ist eine Helixanordnung rund um die Extruderachse und senkrecht zu dieser möglich. Zumindest ein Teil der Entwässerungsöffnungen kann erfindungsgemäß durch eine MVP, einem Feinlochblech oder einer Schlitzlochblende abgedeckt sein. Weiterhin sind die nicht derart ausgerüsteten Entwässerungsöffnungen bevorzugt mit einer Vorrichtung versehen, die das Austreten des geförderten Elastomeren A verhindern. Besonders bevorzugt werden dazu sog. Rückhalteschnecken verwendet.

Die Entwässerungsöffnungen sind in an sich bekannter Weise ausgestaltet. Bevorzugt werden Entwässerungsöffnungen verwendet, deren Dimensionierung so gewählt ist, dass die Öffnungen durch den Extruderinhalt nicht verstopft werden können. Besonders bevorzugt werden als Entwässerungsöffnungen Aussparungen oder Bohrungen im Extruderzylinder (Gehäuse) verwendet. Bevorzugt werden wegen der mehrfach beschriebenen Anfälligkeit für Verstopfungen und dem hohen Anteil an feinen Feststoffpartikeln, die ausgetragen werden, keine Seihergehäuse verwendet.

Die zu den Stauelementen zugehörige Entwässerungsöffnung kann sich in einem Abstand von mindestens einem Schneckendurchmesser D_{Schnecke}, bevorzugt in einem Bereich von 1 bis 4 D_{Schnecke}, und ganz besonders bevorzugt 1 bis 3,5 D_{Schnecke}, vor dem Stauelement, bzw. im Falle mehrerer Stauelemente, vor dem ersten Stauelement stromaufwärts befinden. Unter "Abstand" soll dabei die Strecke zwischen der Mitte der Entwässerungsöffnung und dem Beginn des ersten Stauelementes verstanden werden.

Durch diesen Abstand von Stauelementen und Entwässerungsöffnung wird erreicht, dass die Entwässerungsöffnung nicht in dem Bereich des Extruders liegt, in dem der Druck des gegen die Stauelemente geförderten Polymeren sehr hoch ist (Druckmaximum).

Die Temperatur des austretenden Wassers beträgt im allgemeinen 20 bis 95°C und bevorzugt 25 bis 70°C, gemessen an der Austrittsöffnung.

Zur Verbesserung der Entwässerungsleistung des ersten Abquetschabschnittes kann es vorteilhaft sein, bereits im Dosierabschnitt, oder zwischen Dosierabschnitt und der ersten Entwässerungsöffnung, Stauelemente und/oder Knetelemente zu verwenden. Diese Stau- bzw. Knetelemente werden nach Art und Anzahl derart ausgewählt, dass sie die Elastomerkomponente in gewisser Weise mechanisch beanspruchen und derart in ihrer Beschaffenheit verändern, dass ihre Entwässerbarkeit verbessert wird, sie jedoch nicht oder nur in untergeordnetem Ausmaß plastifizieren oder anschmelzen, jedoch nicht aufschmelzen.

Im ersten Abquetschabschnitt werden, abhängig von der Elastomerkomponente und dem anfangs vorhandenen Restwassergehalt, üblicherweise 10 bis 90, bevorzugt 20 bis 80 Gew.-% des anfänglich enthaltenen Restwassers entfernt.

In einer bevorzugten Ausführungsform wird der Extruder in den Dosierabschnitten und in den Abquetschabschnitten nicht beheizt. In einer Ausführungsform wird der Extruder in diesen genannten Abschnitten gekühlt.

Die partiell entwässerte Elastomerkomponente A wird über die Stauzonen hinweggefördert und gelangt in den nächsten Extruderabschnitt.

In einer für die Herstellung mancher schlagzäher Thermoplasten bevorzugten Ausführungsform folgt auf den soeben beschriebenen ersten Abquetschabschnitt 3 ein zweiter Abquetschabschnitt 3', der wiederum aus einem fördernden Abschnitt und einer als Hindernis wirksamen Stauzone besteht. Hinsichtlich dieses Abschnittes gelten im wesentlichen die gleichen Ausführungen wie zum ersten Abquetschabschnitt 3, insbesondere auch zur Art der eingesetzten MVP, Feinlochblech oder Schlitzlochblende.

Im fakultativen zweiten Abquetschabschnitt wird die Elastomerkomponente weiter entwässert, wobei nochmals bis zu 80, bevorzugt bis zu 65 Gew.-% des anfänglich (vor der Extrusion) enthaltenen Wassers entfernt werden. Durch die von der rotierenden Extruderschnecke eingebrachte mechanische Energie steigt die Temperatur der Elastomerkomponente im zweiten Abquetschabschnitt im allgemeinen auf Werte bis 250°C an.

Bevorzugt wird das Verfahren derart ausgestaltet, dass der Extruderinhalt möglichst niedrigen Temperaturen ausgesetzt ist. Bevorzugt wird daher der Extruder derart ausgestaltet und betrieben, dass die Temperatur der Elastomerkomponente 200°C, besonders bevorzugt 180°C nicht überschreitet. Die genannten Temperaturen beziehen sich auf die Stauzonen.

Das in dem zweiten Abquetschabschnitt entfernte Wasser tritt zu 20 bis 99 Gew.-% als Flüssigkeit aus, die an 100 Gew.-% fehlende Menge als Dampf. Bevorzugt werden die Entwässerungsöffnungen jedoch so ausgestaltet, dass der Anteil des flüssig austretenden Wassers trotz der hohen Materialtemperatur 70 Gew.-% oder mehr beträgt. Hierzu werden die Geometrien der Extruderschnecken und gegebenenfalls der Rückhalteschnecken derart gestaltet, dass, beispielsweise durch Druckaufbau im Austrittsbereich oder durch andere Maßnahmen, das Wasser überwiegend flüssig bleibt. In diesem Abquetschabschnitt können die Entwässerungsöffnungen erfindungsgemäß auch mit einer MVP, einem Feinlochblech oder einer Schlitzlochblende ausgerüstet. Eine gegebenenfalls benötigte Druckhaltung wird im Allgemeinen außerhalb der MVP, dem Feinlochblech oder der Schlitzlochblende in den Ableitungen erfolgen.

In der Regel liegt die Wassertemperatur an der Austrittsöffnung bei 40 bis 130, bevorzugt bei 50 bis 99°C., unter Druck aber auch höher.

Die teilentwässerte Elastomerkomponente kann am Ende des zweiten Abquetschabschnittes 3' bereits in größerem Umfange angeschmolzen oder aufgeschmolzen sein und in Form größerer zusammengeschmolzener Agglomerate vorliegen.

Der Extruder kann hinter dem zweiten Abquetschabschnitt 3' weitere Abquetschabschnitte enthalten, insbesondere dann, wenn der anfängliche Restwassergehalt der Elastomerkomponente A hoch ist.

Das ausgepresste Wasser verlässt den Extruder in der Regel durch alle angebrachten Entwässerungsöffnungen. Je nach den Eigenschaften der Elastomerkomponente, der eindosierten Menge (Füllgrad des Extruders) und ihrem Restwassergehalt ist jedoch auch möglich, daß das abgequetschte Wasser nicht an allen der verfügbaren Entwässerungsöffnungen austritt, und die anderen Entwässerungsöffnungen "trocken" sind, also kein oder nahezu kein Wasser ausleiten. Dies hat sich in keiner Weise als nachteilig erwiesen.

Das in den Abquetschabschnitten entfernte Wasser kann in einer bevorzugten Ausführungsform gesammelt und beispielsweise bei der Herstellung der Komponenten A, B, C und/oder D verwendet werden. So kann das ausgepresste Wasser etwa im Herstellprozeß der Elastomerkomponente A, oder bei der Ausfällung des Kautschuks aus seinem Latex, wiederverwendet werden. Durch dieses Kreisfahrweise des Wassers verbessert sich die Wirtschaftlichkeit und die Umweltfreundlichkeit des Verfahrens, da weniger Abwasser anfällt.

Nach Passieren des letzten Abquetschabschnittes ist die Elastomerkomponente von einem erheblichen Teil des Restwassers befreit (Komponente A') und gelangt in einen Zuführabschnitt 4, in dem sich eine oder mehrere Zufuhröffnungen für das thermoplastische Polymere B befinden. Vorteilhaft ist, dass das Polymere B in Form seiner Schmelze zugeführt wird. Enthält der Abschnitt mehrere Zufuhröffnungen, so können diese z.B. hintereinander entlang einer gedachten Achse in Längsrichtung des Extruders, kreisförmig entlang des Extruderumfanges oder entlang einer imaginären Helix um den Extruder herum angeordnet sein.

Die Zufuhr der Schmelze des Polymeren B kann mittels eines Extruders oder mittels Fördereinrichtungen wie Schmelzepumpen oder Dosierschnecken erfolgen.

Im beschriebenen Zuführabschnitt 4 können außer der Schmelze des thermoplastischen Polymeren B auch die Komponente C und/oder die Komponente D, bzw. Anteile der insgesamt zugegebenen Menge der Komponenten C und/oder D, in den Extruder eingeführt werden. Dabei können diese Komponenten als Schmelze bzw. Flüssigkeit vorliegen und werden in diesem Falle in der Regel mit Dosierreinrichtungen, wie sie auch zur Zufuhr der Schmelze des Polymeren B verwendet werden, oder, falls die Komponente flüssig ist, mit einer Flüssigkeitspumpe, zudosiert. Im Falle fester Komponenten C und/oder D erfolgt die Dosierung üblicherweise wie bei Komponente A beschrieben.

Die Komponenten C und D können getrennt von B oder zusammen mit B in einer der folgenden Kombinationen dem Extruder zugeführt werden: B+C+D, B/C+D, B+C/D, B+D/C, B/C/D (wobei / "getrennt von" mittels je einer separaten Öffnung und + "zusammen mit" durch eine gemeinsame Öffnung bedeutet).

Ebenso kann man die Komponenten C und/oder D, bzw. Anteile der insgesamt zugegebenen Menge der Komponenten C und/oder D, in nicht oder nicht vollständig aufgeschmolzender Form mittels eines zwangsfördernden Dosierorgans dem Extruder in den Abschnitt 4 oder auch in die bereits beschriebenen Abschnitte 1 und 2 zuführen. Ein solches Dosierorgan ist beispielsweise ein Extruder, insbesondere ein Zweischneckenextruder mit kämmenden, gegenläufigen Schnecken.

Die Verwendung eines Extruders (sogenannter "Seitenextruder") oder einer Dosierpumpe als Dosiereinrichtung für die Komponenten C und/oder D ist bevorzugt.

Im Bereich des Zuführabschnittes 4, in dem die Schmelze des thermoplastischen Polymeren B sowie gegebenenfalls die Komponenten C und/oder D zugeführt werden, ist die Schnecke zweckmäßigerweise als Förderschnecke ausgebildet, welche die Mischung aus Elastomerkomponente A und der Schmelze des Thermoplasten B sowie gegebenenfalls den Bestandteilen C und/oder D nur in geringem Ausmaß zu homogenisieren vermag. Zur Ausgestaltung der Förderschnecke gilt das für den Dosierabschnitt Gesagte. Es können in diesem Bereich aber auch Misch- und/oder Knetelemente eingesetzt werden.

In einer bevorzugten Ausführungsform weist der Extruder zusätzlich zum Abschnitt 4, der sich zwischen dem (letzten) Abquetschabschnitt und dem (ersten) Plastifizierungsabschnitt 5 (siehe nachfolgend) befindet, an anderer Stelle weitere Abschnitte 4', 4" etc. auf, in dem ebenfalls eine Schmelze des thermoplastischenPolymeren B zugeführt wird. Insbesondere befinden sich diese weiteren Zufuhrabschnitte 4', 4 " etc. stromabwärts im Bereich hinter dem Zufuhrabschnitt 4 und vor dem Ende des Extruders.

Die Zufuhr der Schmelze von B über mehrere Zufuhrabschnitte 4, 4', 4 " etc. kann insbesondere dann vorteilhaft sein, wenn spezielle Produktzusammensetzungen gewünscht sind. In einer bevorzugten Ausführungsform befinden sich weitere Zufuhrabschnitte 4', 4 " etc. für die Schmelze des thermoplastischen Polymeren B stromabwärts zwischen Plastifizierungs- und Entgasungsabschnitt, zwischen zwei Entgasungsabschnitten, zwischen dem letzten Entgasungsabschnitt und der Austragszone, oder in der Austragszone.

Falls die Schmelze von B (oder C oder B und C) über mehrere Zufuhrabschnitte 4, 4', 4''etc. dem Extruder zugeführt wird, kann die Verteilung der Gesamtmenge von B auf die verschiedenen Abschnitte 4, 4', 4 " etc. in weiten Grenzen variieren. Im Falle zweier Zufuhrsabschnitte 4 und 4' kann das Massenverhältnis [Schmelze von B in Abschnitt 4 / Schmelze von B in Abschnitt 4'] zwischen 9,5 : 0,5 und 0,5 : 9,5 liegen, bevorzugt zwischen 9 : 1 und 1 : 9, besonders bevorzugt zwischen 8,5 : 1,5 und 1,5 : 8,5. Indem die Gesamtmenge von B auf die einzelnen Abschnitte 4, 4', 4 " etc. verteilt wird, können die Eigenschaften des Verfahrensproduktes in gewissem Umfang beeinflusst werden.

An den die Thermoplastschmelze B sowie gegebenenfalls die Bestandteile C und/oder D zuführenden Abschnitt schließt sich ein Plastifizierungsabschnitt 5 an, der mit Durchmischungs-, Knet- und/oder anderen Plastifizierungselementen versehen ist.

Die Durchmischungs- und/oder Knetelemente homogenisieren die Polymerenmischung unter gleichzeitigem Aufschmelzen der entwässerten Elastomerkomponente A' sowie ggf. der Komponenten C und/oder D.

Als Durchmischungs- und Knetelement kommen die dem Fachmann geläufigen Bauteile in Betracht, beispielsweise
- Schneckenelemente mit geringer Steigung in Förderrichtung,
- Knetblöcke mit schmalen oder breiten, fördernden oder nichtfördernden Knetscheiben,
- Schneckenelemente mit einer Steigung entgegen der Förderrichtung
- Zylinderscheiben, Exzenterscheiben und Blöcke, welche diese Scheiben enthalten,
- Zahnmischelemente (ZME) oder
- Schmelzmischelemente (SME)
oder eine Kombination solcher Elemente. Es können auch die für die Stauelemente beispielhaft genannten Schneckenelemente verwendet werden, da im allgemeinen jedes Stauelement auch durchmischend wirkt. Bevorzugt werden zur Plastifizierung als Durchmischungs- und Knetelemente verschiedene Kombinationen von Knetblöcken eingesetzt. Auch Drosselscheiben können vorteilhaft verwendet werden. Alle genannten Elemente können als Normalausführung entsprechend dem Durchmesser des Extrudergehäuses, oder auch als spezielle Ausführung mit verringertem Durchmesser, Anwendung finden.

Weiterhin können alle genannten Elemente auch in anderer Weise, z.B. zur Erzielung einer schonenden Verarbeitung des Extruderinhalts oder einer intensiveren Durchmischung, modifiziert sein. Beispielsweise können Fördergewinde und/oder Knetblöcke mit durchbrochenen und/oder durchmesserreduzierten Kämmen versehen sein.

Die Auswahl der Schneckenelemente im Plastifizierungsabschnitt hinsichtlich ihrer Art, Anzahl und Dimensionierung richtet sich nach den Komponenten der Polymermischung, insbesondere nach der Viskosität und Erweichungstemperatur sowie der Mischbarkeit der Komponenten.

Der Extruder kann nach dem beschriebenen Plastifizierungsabschnitt einen oder mehrere weitere Plastifizierungsabschnitte 5' enthalten, beispielsweise wenn die Homogenisierung und das Aufschmelzen der Mischung im ersten Plastifizierungsabschnitt nicht vollständig war.

Für den bzw. die weiteren Plastifizierungsabschnitte gelten die Ausführungen zum ersten Plastifizierungsabschnitt entsprechend.

Es ist möglich, mindestens einem der Plastifizierungsabschnitte die Komponente C und/oder die Komponente D, bzw. Anteile der insgesamt zugegebenen Menge der Komponenten C und/oder D, zuzuführen, wobei diese Zufuhr der Komponenten getrennt voneinander durch verschiedene Öffnungen oder zusammen durch eine gemeinsame Öffnung erfolgen kann.

In einer bevorzugten Ausführungsform wird die Schmelze der thermoplastischen Polymeren B sowie gegebenenfalls die Komponenten C und/oder D dem Extruder am Anfang des Plastifizierungsabschnittes zugeführt. Bei dieser Ausführungsform fällt demnach der Abschnitt der Thermoplastzufuhr 4 mit dem Anfang des Plastifizierungsabschnittes 5 zusammen.

In einer weiteren besonderen Ausführungsform des Extruders befindet sich ein oder mehrere weitere Plastifizierungsabschnitte vor dem Abschnitt 4, in dem die Schmelze des thermoplastischen Polymeren zugeführt wird, also hinter dem letzten Abquetschabschnitt. In diesem Plastifizierungsabschnitt 5" wird die weitestgehend entwässerte Elastomerkomponente A', beispielsweise das Kautschukpulver, zunächst allein homogenisiert und plastifiziert.

Die Schmelze des thermoplastischen Polymeren B sowie gegebenenfalls die Komponenten C und/oder D werden demnach bei dieser Ausführungsform in eine viskose "Schmelze" der Elastomerkomponente A' eingebracht. In diesem Fall dient der der Zumischung von Schmelze B sowie C und/oder D (Abschnitt 4) nachfolgende Plastifizierungsabschnitt 5 lediglich der Homogenisierung des Gemisches der bereits im plastischen Zustand vorliegenden Komponenten.

Welche der beschriebenen Varianten der Zufuhr von Schmelze B, und fakultativ den Komponenten C und/oder D, nämlich
- in einen fördernden Abschnitt vor dem Plastifizierungsabschnitt,
- am Anfang des Plastifizierungsabschnittes,
- in einen fördernden Abschnitt zwischen zwei Plastifizierungsabschnitten,
gewählt wird, hängt von den Mengenverhältnissen sowie den physikalischen und chemischen Eigenschaften der zu vermischenden Komponenten A, B, C und D ab. Nur beispielhaft seien die Viskositäten der Schmelzen von Elastomerkomponente A' und thermoplastischem Polymeren B sowie (falls in diesem Teil des Extruders zudosiert) der Komponenten C und/oder D, die Erweichungstemperaturen der Komponenten, ihre thermische Belastbarkeit bzw. Zersetzungsneigung bei höheren Temperaturen, die Verträglichkeit im Sinne einer Mischbarkeit bzw. Benetzbarkeit der Komponenten, der Restwassergehalt der Polymermischung aus Elastomerkomponente A' und thermoplastischem Polymeren B und gegebenenfalls den Bestandteilen C und D, und, im Falle von partikelförmigen Bestandteilen, deren Teilchengröße und Teilchengrößenverteilung genannt.

Die erfindungsgemäße Vorrichtung weist einen oder mehrere Entgasungsabschnitte 6 bzw. 6', die jeweils mit einer oder mehreren Entgasungsöffnungen versehen sind, auf. In den Entgasungsabschnitten wird das verbliebene Restwasser, welches in den Abquetschabschnitten noch nicht mechanisch entfernt wurde, teilweise oder vollständig entfernt. Entgasungsabschnitte können vor dem ersten Zuführungsabschnitt 4 liegen. Sie können auch dahinter (stromabwärts) angeordnet sein. Darüber hinaus ist es möglich, dass ein Entgasungsabschnitt vor und ein Entgasungsabschnitt hinter dem ersten Zuführungsabschnitt 4 angeordnet sind. So ist es z.B. nach einer bevorzugten Ausführungsform auch möglich, einen oder mehrere Entgasungsabschnitte zwischen zwei Zuführabschnitte 4 und 4'anzuordnen. Nach einer ebenfalls bevorzugten Ausführungsform kann die Anordnung der Entgasungsabschnitte und Zuführungsabschitte so erfolgen, dass vor und nach jeder Zufuhr einer Schmelze eine Entgasung erfolgen kann. Nach einer weiteren bevorzugten Ausführungsform ist es möglich eine oder mehrere Entgasungsabschnitte zusätzlich nach dem letzten Plastifizierungsabschnitt anzuordnen. Nach einer weitern bevorzugten Ausführungsform können die nach dem letzten Plastifizierungsabschnitt angeordneten Entgasungsabschnitte die einzigen Entgasgungsabschnitte der Vorrichtung sein. Wegen der üblicherweise über 100°C liegenden Temperaturen der Polymerschmelze tritt das Wasser zumeist vollständig als Dampf aus. Die zur Verdampfung des Wassers notwendige Energie wird durch das Abquetschen, die Plastifzierung und/oder über die dosierte Schmelze eingebracht.

Die Entgasungsöffnungen können wie eingangs erläutert angeordnet sein und die eingangs beschriebene Geometrie haben. Besonders bevorzugt ist eine oben, unten liegende oder seitliche Anordnung mit rechteckigem, kreisförmigen oder Doppelachtquerschnitt.

Die Entgasungsöffnungen können unter Normaldruck, unter Vakuum oder unter Überdruck betrieben werden, wobei alle Entgasungsöffnungen gleichen oder unterschiedlichen Druck aufweisen können. Durch entsprechenden Druckaufbau oder Vakuum kann der Feuchtegehalt des Extrusionsgutes an dieser Stelle in gewissen Grenzen eingestellt werden. Im Falle eines Vakuums beträgt der Absolutdruck üblicherweise 2 bis 900 mbar, bevorzugt 10 bis 800 mbar, besonders bevorzugt 30 bis 500 mbar; bei einer Entgasung unter Überdruck wird in der Regel bis zu 20 bar Absolutdruck eingestellt. Bevorzugt ist es jedoch, die Entgasungsabschnitte unter Normaldruck oder unter Vakuum zu betreiben.

Die Anzahl der Entgasungsabschnitte sowie wie eingangs erläutert, die Zahl, Anordnung und Dimensionierung der Entgasungsöffnungen richtet sich zweckmäßiger Weise nach dem Wassergehalt des in die Entgasungsabschnitte eintretenden Polymeren und dem gewünschten Wasseranteil im Endprodukt. In einer bevorzugten Ausführungsform wird ein Extruder mit zwei oder drei Entgasungsabschnitten verwendet.

Erfindungsgemäß ist mindestens eine der Entgasungsöffnungen des Extruders mit einer MVP der eingangs genannten Art ausgerüstet. Besonders bevorzugt sind darunter MVP. Die übrigen Entgasungsöffnungen sind nicht abgedeckt oder können wie es bevorzugt ist, mit anderen Vorrichtungen versehen sein, z.B. Rückhalteschnecken.

Nachdem ein Teil des in der Elastomerkomponente A enthaltenen Restwassers bereits in den Abquetschabschnitten 3 und 3' entfernt wurde, werden in allen Entgasungsabschnitten 6 und 6' zusammengenommen etwa 10 bis 80, bevorzugt 20 bis 75 Gew.-% des vor der Extrusion in der Elastomerkomponente A enthaltenen Restwassers entfernt.

Im Bereich der Entgasungsabschnitte sind die Extruderschnecken in der Regel als übliche Förderschnecken ausgebildet, wie sie bereits für die Dosierabschnitte beschrieben wurden. Es kann jedoch sinnvoll sein, im Bereich zwischen den Entgasungsöffnungen Knet- oder Durchmischelemente in die Schnecken einzubauern, um die bei der Verdampfung des Wassers verbrauchte Energie wieder zuzuführen.

In einer bevorzugten Ausführungsform weist der Extruder zwischen dem letzten Entgasungsabschnitt und der Austragszone einen weiteren Abschnitt 7 auf, in den mittels mindestens einer Dosiereinrichtung die Komponenten C und/oder D (bzw. Anteile der insgesamt zugegebenen Menge der Komponenten C und/oder D), entweder gemeinsam oder getrennt voneinander, dem Extruder zugeführt werden.

Dieser weitere Abschnitt 7 ist mit Durchmischungs-, Knet- oder anderen Plastifizierungselementen versehen, wie sie beispielhaft für die Plastifizierungsabschnitte bereits genannt wurden. Sie homogenisieren die Polymerenmischung.

Die zur Zufuhr von C und/oder D erforderlichen Dosiereinrichtungen wurden ebenfalls bereits beschrieben.

Bevorzugt werden als Durchmischungs- und/oder Knetelemente Knetblöcke mit nichtfördernden Knetscheiben und/oder Knetblöcke mit fördernder Steigung, Knetblöcke mit unterschiedlicher Stegbreite, Zahnmischelemente und Schmelzmischelemente, und als Dosiereinrichtungen Extruder mit einer oder zwei Schnecken (sog. Seitenextruder), und/oder Pumpen, insbesondere Schmelzepumpen, verwendet.

In einer bevorzugten Ausführungsform wird die Gesamtmenge der Komponenten C und/oder D, die in den Extruder eingeführt werden sollen, entweder im weiteren Abschnitt 7, oder im Dosierabschnitt 2, oder im weiteren Abschnitt 7 und im Dosierabschnitt 2, dem Extruder zugeführt.

Die Zugabe der Komponenten C und/oder D kann gemeinsam durch mindestens eine oder getrennt durch mehrere Zufuhröffnungen erfolgen.

Der letzte Abschnitt des Extruders ist die Austragzone 8. Sie besteht aus einer Förderschnecke und einem geschlossenen Gehäuseteil, das mit einer definierten Austragsöffnung abgeschlossen ist.

Bevorzugt wird als Austragsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich.

In einer besonderen Ausführungsform wird statt der oben beschriebenen Düsenleiste mit der sonst üblichen Kombination aus Strangabzug, Wasserbad und Granulator ein besonderer Düsenkopf mit anschließender Unterwassergranulierung eingesetzt. Hierbei tritt die Polymerschmelze durch eine Düsenplatte mit bevorzugt kreisförmig angeordneten runden Bohrungen, wird unter Wasser von rotierenden Messern abgetrennt und unter Wasser abgekühlt, wobei das Polymer zu mehr oder weniger runden, perlförmigen Körnern erstarrt. Bei der Anordnung der Bohrungen sind jedoch auch andere als kreisförmige Anordnungen und andere als runde Lochformen gebräuchlich.

In einer weiteren Ausführungsform wird statt des Austrags über Düsenleiste, Wasserbadkühlung und Granulierung ein Heißabschlagsverfahren eingesetzt, wobei die aus dem Düsenkopf austretende Polymerschmelze nicht durch Flüssigkeit gekühlt, sondern nach Austritt aus dem Düsenkopf nach kurzer Luftkühlung noch im heißen Zustand zerkleinert (granuliert) wird. Das enstehende Granulat wird danach weiter gekühlt (bespielsweise durch Besprühen mit Wasser) oder kühlt bei der Weiterverarbeitung ab, sofern dies notwendig ist. Es ist auch die Weiterverarbeitung im heißen Zustand oder die Direktextrusion von Platten, Folien, Rohren und Profilen möglich.

In einer anderen Ausführungsform wird eine sog. Unterwasser-Stranggranulierung eingesetzt. Dabei tritt die Schmelze als Strang aus einer Düsenplatte aus, und wird sofort durch einen Wasserschwall benetzt, wonach die Stränge über eine schiefe Ebene in ein Wasserbad eingeführt und nach dem Abkühlen granuliert werden

In einer weiteren besonderen Ausführungsform ist die Austragszone 8 mit einer Vorrichtung zur Filtration der aus dem Extruder austretenden Schmelze versehen, die sich - in Förderrichtung - vor dem Düsenkopf befindet. Derartige Vorrichtungen zur kontinuierlichen Schmelzefiltration sind dem Fachmann bekannt und handelsüblich. Man kann, falls notwendig, zwischen Austragszone und Schmelzefiltration ein Förderorgan installieren, beispielsweise eine Schmelzepumpe oder einen Schneckenförderer, um in der Schmelze den zum Passieren der Filtereinheit notwendigen Druck aufzubauen.

Die aus der Filtrationsvorrichtung austretende Schmelze wird granuliert bzw. auf andere Art weiterverarbeitet, wie es bereits beschrieben wurde.

Der Wassergehalt des ausgetragenen Polymeren (die "Strangfeuchte") beträgt in der Regel 0,05 bis 1,5 Gew.-%, bezogen auf dieses Polymere. Die Temperatur der aus der Austragsöffnung austretenden Polymerschmelze beträgt in der Regel 180 bis 350°C, je nach Art der eingesetzten Polymeren.

Wie allgemein bekannt ist, können die verschiedenen Zonen eines Extruders individuell geheizt oder gekühlt werden, um entlang der Schneckenachse ein optimales Temperaturprofil einzustellen. Weiterhin ist dem Fachmann geläufig, daß üblicherweise die einzelnen Abschnitte des Extruders verschieden lang sein können. Speziell kann es zur Erlangung bestimmter Produkteigenschaften sinnvoll sein, bestimmte Teilbereiche des Extruders zu kühlen oder auf eine bestimmte, von der Temperatur des restlichen Extruders abweichende Temperatur zu temperieren.

Die im Einzelfall zu wählenden Temperaturen und Längen der einzelnen Abschnitte unterscheiden sich in Abhängigkeit der beispielhaft bereits erwähnten chemischen und physikalischen Eigenschaften der Komponenten und deren Mengenverhältnissen.

Gleiches gilt auch für die Schneckendrehzahl, die innerhalb eines weiten Bereiches variieren kann. Nur beispielhaft sei eine Drehzahl der Extruderschnecken im Bereich von 50 bis 1800 min⁻¹ genannt. Bevorzugt ist ein Drehzahlbereich von 100 bis 700 min⁻¹.

Es ist vorteilhaft, den Extruder so auszugestalten und zu betreiben, daß sich, bei einer Schneckendrehzahl von 50 bis 1200 min⁻¹, im Bereich der Abquetschabschnitte mittlere Schergeschwindigkeiten von 15 bis 450 s⁻¹ einstellen. Für den bevorzugten Drehzahlbereich 100 bis 700 min⁻¹ werden vorteilhaft Schergeschwindigkeiten von 35 bis 260 s⁻¹ eingestellt. Jedoch kann es je nach Art, Menge und Eigenschaften der verwendeten Komponenten zweckmäßig sein, bei mittleren Schergeschwindigkeiten außerhalb dieses Bereiches zu arbeiten.

Als Extruderschnecken können alle handelsüblichen Schnecken verwendet werden, beispielsweise Schnecken mit einem Außendurchmesser von 10 bis 1000 mm. Welche Schneckendurchmesser geeignet sind, richtet sich z.B. nach der Art und Menge der in den Extruder eindosierten Komponenten. Die Außendurchmesser der Schnecken kann entlang des Extruders konstant sein oder in gewissen Grenzen variieren.

Im Extruder können je nach Art und Mengen der Komponenten, Schnecken mit kleiner Gangtiefe oder Schnecken mit großer Gangtiefe (sog. "tiefgeschnittene Schnecken") verwendet werden. Bevorzugt werden Schnecken einem Gangtiefenverhälntnis D_{Schnecke}, _{außen}/D_{Schnecke}, innen von 1,2 bis 1,8 bevorzugt 1,4 bis 1,6, besonders bevorzugt 1,45 bis 1,58, verwendet. Eine handelsübliche Ausführungsform des Extruders, der für das erfindungsgemäße Verfahren geeignet ist, weist beispielsweise ein Gangtiefenverhältnis von 1,55 auf, hat also eine große Gangtiefe.

In einer anderen Ausführungsform werden Schnecken mit mittlerer Gangtiefe, besonders solche mit einem Gangtiefenverhältnis von 1,4 bis 1,48 verwendet. Diese Ausführungsform des Extruders kann für bestimmte Komponenten und bestimmte Mengen der Komponenten vorteilhaft sein. Es sind auch Schnecken mit Gangtiefenverhältnissen von mehr als 2 geeignet.

Die Gangzahl der Schnecke kann variieren. Insbesondere ist n gleich 1 oder 2 oder 3. Bevorzugt werden zweigängige Schnecken verwendet. Jedoch können auch Schnecken mit anderen Gangzahlen eingesetzt werden, oder solche Schnecken, die Abschnitte mit unterschiedlichen Gangzahlen aufweisen.

Insbesondere können Extruderschnecken verwendet werden, bei denen das Gangtiefenverhältnis entlang der Schnecke variiert, wobei ein Zusammenhang zwischen Gangzahl und Gangtiefenverhältnis besteht (Stufenschnecke). Bevorzugt kann eine Schnecke eingesetzt werden, bei dem der Wechsel von 3 auf 2 Gänge mit einer Änderung der Gangtiefe von niedrigem zu hohem Gangtiefenverhältnis einhergeht.

Alle beschriebenen Ausführungsformen des Verfahrens haben gemein, daß die Einführung der Komponenten C und/oder D in den Extruder nicht in den Bereichen erfolgt, in denen der Extruderinhalt unter hohem Druck steht (erzeugt durch druckaufbauende Elemente). Vielmehr werden C und/oder D in ausreichendem Abstand vor oder hinter diesen Bereichen, oder völlig "drucklos", d.h. nur gegen den üblichen Druck eines neutral fördernden Schneckenelementes, zudosiert.

Als Elastomerkomponente A kann jedes Polymere eingesetzt werden, das elastomere Eigenschaften hat und einem Extruder zugeführt werden kann. Es kann auch eine Mischung verschiedener Elastomerkomponenten A eingesetzt werden.

Insbesondere werden als Komponente A, wie eingangs erwähnt, partikelförmige Kautschuke verwendet. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 50, besonders bevorzugt 25 bis 40 Gew.-% Restwasser.

Eine Ausführungsform der Erfindung besteht in einem Verfahren, bei dem als Elastomerkomponente A zwei- oder mehrstufig aufgebaute Pfropfkautschuke verwendet werden, bei denen die elastomeren Grund- oder Pfropfstufen durch Polymerisation eines oder mehrerer der Monomeren Butadien, Isopren, Chloropren, Styrol, Alkylstyrol, C₁- bis C₁₀-Alkyleste der Acrylsäure oder der Methacrylsäure sowie geringen Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden.

Bevorzugt sind Pfropfpartikel A aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/Methylmethacrylat, n-Butylacrylat/Styrol/Methylmethacrylat, Butadien/Styrol/Acrylnitril/Methylmethacrylat und Butadien/n-Butylacrylat/Methylmethacrylat/Styrol/Acrylnitril. In Kern oder Schale können bis zu 10 Gew.-% funktionelle Gruppen tragende, polare Monomere oder auch vernetzend wirkende Monomere, einpolymerisiert sein.

In dieser Ausführungsform werden als thermoplastische Polymere B Styrol-Acrylnitril-(SAN)-Copolymere, Polystyrol, Polymethylmethacrylat, Polyvinylchlorid oder Mischungen dieser Polymere eingesetzt.

Dabei sind SAN-Polymere, Polymethylmethacrylat (PMMA) oder Mischungen dieser Polymere bevorzugt.

Weiterhin können als thermoplastische Polymere B auch Polycarbonate, Polyalkylenterephthalate wie Polybutylenterephthalat und Polyethylenterephthalat, Polyoxymethylen, Polymethylmethacrylat, Polyphenylensulfid, Polysulfone, Polyethersulfone und Polyamide, und Mischungen dieser Thermoplasten, eingesetzt werden. Außerdem können auch thermoplastische Elastomere wie thermoplastisches Polyurethan (TPU) als Polymeres B verwendet werden.

Ebenso kann man als Komponente B Copolymere auf Basis von Styrol/Maleinsäureanhydrid, Styrol/imidiertem Maleinsäureanhydrid, Styrol/Maleinsäureanhydrid/imidiertem Maleinsäureanhydrid, Styrol/Methylmethacrylat/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwenden.

Bei allen genannten thermoplastischen Polymeren B kann das Styrol ganz oder teilweise durch α-Methylstyrol, oder durch kernalkylierte Styrole, oder durch Acrylnitril ersetzt sein.

Von den zuletzt genannten Polymeren B sind solche auf Basis von α-Methylstyrol/Acrylnitril, Styrol/Maleinsäureanhydrid, Styrol/Methylmethacrylat und Copolymere mit imidiertem Maleinsäureanhydrid bevorzugt.

Bekannte Beispiele für die Elastomerkomponente A sind Polymerisate von konjugierten Dienen wie Butadien, mit einer äußeren Pfropfhülle auf Basis einer vinylaromatischen Verbindung wie etwa SAN-Copolymeren. Gleichfalls bekannt sind Pfropfkautschuke auf Basis von vernetzten Polymerisaten aus C₁- bis C₁₀-Alkylestern der Acrylsäure wie n-Butylacrylat, Ethylhexylacrylat, gepfropft mit Polymeren auf der Grundlage vinylaromatischer Verbindungen wie SAN-Copolymeren. Gebräuchlich sind auch Pfropfkautschuke, die im wesentlichen ein Copolymerisat aus konjugierten Dienen und C₁- bis C₁₀-Alkylacrylaten, beispielsweise ein Butadien-n-Butylacrylat-Copolymerisat, und eine äußere Pfropfstufe aus SAN-Copolymer, Polystyrol oder PMMA enthalten.

Die Herstellung solcher Pfropfkautschuke nach den üblichen Verfahren, insbesondere durch Emulsions- oder Suspensionspolymerisation, ist bekannt.

Pfropfkautschuke auf Basis von SAN-gepfropftem Polybutadien sind beispielsweise in den Schriften DT 24 27 960 und EP-A 258 741 beschrieben, solche auf Basis von SAN-gepfropftem Poly-n-Butylacrylat in DE-AS 12 60 135 und DE-OS 31 49 358. Näheres zu SAN-gepfropften Poly(Butadien/n-Butylacrylat)-Mischkautschuken ist der EP-A 62 901 zu entnehmen.

Als thermoplastische Polymere B werden im Falle der im letzten Absatz genannten Pfropfkautschuke Copolymere aus Styrol und Acrylnitril verwendet. Sie sind bekannt und z.T. auch handelsüblich und haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse M_{w} von etwa 40000 bis 2000000.

Bevorzugt werden die thermoplastischen Polymeren B durch kontinuierliche Substanz- oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Extruder zugeführt wird. Jedoch ist auch eine Herstellung durch Emulsions-, Suspensions- oder Fällungspolymerisation möglich, wobei in einem zusätzlichen Arbeitsschritt das Polymere von der flüssigen Phase getrennt wird.

Einzelheiten der Herstellungsverfahren sind z.B. im Kunststoffhandbuch, Hrg. R. Vieweg und G. Daumiller, Bd. V "Polystyrol", Carl-Hanser-Verlag, München, 1969, S. 118 bis S. 124 beschrieben.

Ist die Elastomerkomponente A ein SAN-gepfropftes Polybutadien, so entsteht durch Einarbeiten des SAN eine Formmasse, die als ABS (Acrylnitril/Butadien/Styrol) bekannt ist. Wird als Komponente A ein SAN-gepfropftes Alkylacrylat verwendet, so entstehen sog. ASA-Formmassen (Acrylnitril/Styrol/Acrylat).

In einer anderen Ausführungsform werden Pfropfkautschuke mit bis zu 60 Gew.-% Restwassergehalt auf Basis von Polydienen und/oder Polyalkylacrylaten sowie SAN und/oder PMMA eingesetzt, die aus mehr als zwei Pfropfstufen aufgebaut sind.

Beispiele für solche vielstufigen Pfropfpartikel sind Teilchen, die als Kern ein Polydien und/oder Polyalkylacrylat, als erste Hülle ein Polystyrol oder SAN-Polymeres und als zweite Hülle ein anderes SAN-Polymeres mit einem veränderten Gewichtsverhältnis Styrol : Acrylnitril enthalten, oder auch Teilchen aus einem Polystyrol-, Polymethylmethacrylat- oder SAN-Polymerisat-Kern, einer ersten Hülle aus Polydien und/oder Polyalkylacrylat und einer zweiten Hülle aus Polystyrol, Polymethylmethacrylat oder SAN-Polymer. Weitere Beispiele sind Pfropfkautschuke aus einem Polydienkern, einer oder mehreren Polyalkylacrylathüllen und einer oder mehreren Polymer-Hüllen aus Polystyrol, Polymethylmethacrylat oder SAN-Polymer oder analog aufgebaute Pfropfkautschuke mit Acrylatkern und Polydienhüllen.

Ferner sind Copolymerisate mit mehrstufigem Kern-Schale-Aufbau aus vernetztem Alkylacrylat, Styrol, Methylmethacrylat und einer äußeren Schale aus PMMA gebräuchlich.

Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder anderen dem Stand der Technik entsprechende Aufbau solcher Pfropfkautschuke möglich ist.

Derartige Kautschuke werden als schlagzäh machende Komponente für Polyvinylchlorid und bevorzugt für schlagzähes PMMA eingesetzt.

Als thermoplastische Polymere B werden bevorzugt wiederum die genannten SAN-Copolymere und/oder PMMA verwendet.

Ist die Elastomerkomponente A ein mehrschalig aufgebautes Kern/Schale-Polymer auf Basis n-Butylacrylat/Methylmethacrylat, und das Polymere B PMMA, so erhält man demnach schlagzähes PMMA.

Der Durchmesser der partikelförmigen Pfropfkautschuke beträgt 0,05 bis 20 µm. Handelt es sich um die allgemein bekannten Pfropfkautschuke kleinen Durchmessers, so beträgt er bevorzugt 0,08 bis 1,5 und besonders bevorzugt 0,1 bis 0,8 µm.

Bei den zweckmäßigerweise mittels Suspensionspolymerisation hergestellten großteiligen Pfropfkautschuken ist der Durchmesser bevorzugt 1,8 bis 18 und insbesondere 2 bis 15 µm. Derartige Pfropfkautschuke großen Durchmessers lehrt beispielsweise die DE-OS 44 43 886.

Bevorzugte Komponente B sind auch in dieser Ausführungsform die genannten SAN-Copolymere, Polystyrol und/oder PMMA.

Bei der Komponente C handelt es sich um weitere Polymere, insbesondere um thermoplastische Polymere. Für die Komponente C kommen alle Polymere in Betracht, die für das thermoplastische Polymere B genannt wurden. In der Regel unterscheiden sich die Polymeren B und C durch die verwendeten Monomeren.

Sind die Monomeren, aus denen die Polymere B und C aufgebaut sind, identisch, so unterscheiden sich die Komponenten B und C in der Regel durch die Mengenanteile der Monomere - beispielsweise können die Polymere B und C Styrol-Acrylnitril-Copolymere sein, die sich im Styrol:Acrylnitril-Verhältnis unterscheiden. Falls auch die Mengenanteile der Monomeren identisch sind, unterscheiden sich die Polymere B und C durch ihre verschiedenen mittleren Molmassen M_{w}(B) und M_{w}(C), meßbar beispielsweise als verschiedene Viskositätszahlen VZ(B) und VZ(C).

Als Monomere zur Herstellung von C können neben den für die Komponente B unter anderem genannten Monomeren Styrol, Acrylnitril, Methylmethacrylat und Vinylchlorid auch folgende andere Verbindungen als wesentliche Bestandteile verwendet werden:
- α-Methylstyrol und C₁ bis C₈-kernalkylierte Styrole bzw. α-Methylstyrole,
- Methacrylnitril,
- C₁ bis C₂₀-Alkylester der Acrylsäure und der Methacrylsäure
- Maleinsäure, Maleinsäureanhydrid, sowie Maleinsäureimide
- Vinylether, Vinylformamid.

Beispielhaft seien für die Komponente C Polymere auf Basis α-Methylstyrol/Acrylnitril und Methylmethacrylat/Alkylacrylat, sowie Copolymere aus Alkylestern der Acrylsäure oder der Methacrylsäure und Styrol bzw. Acrylnitril bzw. Styrol und Acrylnitril genannt.

Weitere bevorzugte Polymere C sind
- Styrol-Acrylnitril-Copolymere mit von der Komponente B abweichenden Mengenanteilen der Monomeren, oder verschiedenen mittleren Molmassen M_{w},
- Copolymere aus α-Methylstyrol und Acrylnitril,
- Polymethylmethacrylate,
- Polycarbonate,
- Polybutylenterephthalat und Polyethylenterephthalat,
- Polyamide,
- Copolymere aus mindestens zwei der Monomeren Styrol, Methylmethacrylat, Maleinsäureanhydrid, Acrylnitril und Maleinimiden, beispielsweise Copolymere aus Styrol, Maleinsäureanhydrid und Phenylmaleinimid,
- mittels Massepolymerisation oder Lösungspolymerisation hergestelltes ABS,
- thermoplastische Polyurethane (TPU).

Die Herstellung dieser Polymere ist dem Fachmann bekannt, weshalb nachfolgend nur kurz darauf eingegangen wird.

Unter Polymethylmethacrylaten sind insbesondere Polymethylmethacrylat (PMMA) sowie Copolymere auf der Basis von Methylmethacrylat mit bis zu 40 Gew.-% weiterer copolymerisierbarer Monomerer zu verstehen, wie sie beispielsweise unter den Bezeichnungen Lucryl^{®} von der BASF Aktiengesellschaft oder Plexiglas^{®} von Röhm GmbH erhältlich sind. Nur beispielhaft sei ein Copolymeres aus 98 Gew.-% Methylmethacrylat und 2 Gew.-% Methylacrylat als Comonomer (Plexiglas^{®} 8N, Fa. Röhm) genannt. Ebenso geeignet ist ein Copolymeres aus Methylmethacrylat mit Styrol und Maleinsäureanhydrid als Comonomeren (Plexiglas^{®} HW55, Fa. Röhm).

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyhenyl)propan, im allgemeinen als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydihenylether, 4,4'-Dihydroxydiphenylsulfit, 4,4'-dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Polycarbonate sind beispielsweise unter den Handelsnamen Makrolon^{®} (Fa. Bayer), Lexan^{®} (Fa. General Electric), Panlite^{®} (Fa. Tejin) oder Calibre^{®} (Fa. Dow) erhältlich.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

Polybutylenterephthalat und Polyethylenterephthalat werden in der Regel in an sich bekannter Weise durch Kondensation von Terephthalsäure bzw. deren Estern mit Butandiol bzw. Ethandiol unter Katalyse hergestellt. Dabei wird die Kondensation vorteilhaft zweistufig (Vorkondensation und Polykondensation) durchgeführt. Einzelheiten sind etwa Ullmann's Encyclopädie der Technischen Chemie, 4. Auflage, Band 19, S. 61-88 zu entnehmen. Polybutylenterephthalat ist beispielsweise als Ultradur^{®} (Fa. BASF) im Handel erhältlich.

Bevorzugte Polyamide sind ganz allgemein solche mit aliphatischem teilkristallinen oder teilaromatischem sowie amorphem Aufbau jeglicher Art und deren Blends. Entsprechende Produkte sind z.B. unter dem Handelsnamen Ultramid^{®} (Fa. BASF) erhältlich.

Thermoplastische Polyurethane werden üblicherweise hergestellt durch Umsetzung von organischen, vorzugsweise aromatischen Diisocyanaten wie etwa 4,4'-Diphenylmethandiisocyanat, mit Polyhydroxylverbindungen, die vorzugsweise im wesentlichen linear sind, etwa Polyetherole, oder Polyesterole wie Polyalkylenglycolpolyadipate, und als Kettenverlängerungsmittel wirkenden Diolen wie Butan-1,4-diol, in Gegenwart von Katalysatoren wie etwa tertiären Aminen (wie Triethylamin) oder organischen Metallverbindungen.

Dabei beträgt das Verhältnis NCO-Gruppen der Diisocyanate zur Summe der OH-Gruppen (aus den Polyhydroxylverbindungen und den kettenverlängernden Diolen) bevorzugt etwa 1 zu 1.

Bevorzugt erfolgt die Herstellung der TPU nach dem sogenannten Bandverfahren, bei dem die genannten Komponenten und der Katalysator mittels eines Mischkopfes kontinuierlich gemischt und die Reaktionsmischung auf ein Förderband aufgebracht wird. Das Band durchläuft eine auf 60 bis 200°C temperierte Zone, wobei die Mischung ausreagiert und erstarrt.

Einzelheiten zu den TPU sind z.B. der EP-A 443 432 zu entnehmen. TPU sind beispielsweise unter dem Handelsnamen Elastollan^{®} (Fa. Elastogran) erhältlich.

Weiterhin kann die Komponente C im wesentlichen aus Copolymeren von C₂- bis C₈-Alkenen wie Ethylen, Propen und Buten mit
- Vinylaromaten,
- polaren Comonomeren wie Acrylsäure und Methacrylsäure, den C₁- bis C₁₀-Alkylestern der Acrylsäure und der Methacrylsäure,
- anderen mono- oder polyfunktionellen ethylenisch ungesättigten Säuren wie Maleinsäure, Maleinsäureanhydrid, Fumarsäure, Itaconsäure sowie deren Estern, insbesondere Glycidylestern, Estern mit C₁ bis C₈-Alkanolen und Estern mit arylsubstituierten C₁ bis C₈-Alkanolen,
- Kohlenstoffmonoxid,
- nichtaromatischen Vinylverbindungen wie Vinylacetat, Vinylpropionat und Vinylalkylether,
- basischen Monomeren wie Hydroxyethylacrylat, Dimethylaminoethylacrylat, Vinylcarbazol, Vinylanilin, Vinylcaprolactam, Vinylpyrrolidon, Vinylimidazol und Vinylformamid,
- Acrylnitril, Methacrylnitril
bestehen, die in allgemein bekannter Weise hergestellt werden.

In einer bevorzugten Ausführungsform wird ein Polymeres C verwendet, das aus 40 bis 75 Gew.-% Ethylen, 5 bis 20 Gew.-% Kohlenstoffmonoxid und 20 bis 40 Gew.-% n-Butylacrylat herstellbar ist (als Elvaloy® HP-4051 (Fa. DuPont) im Handel erhältlich), oder ein Polymeres, das aus 50 bis 98,9 Gew.-% Ethylen, 1 bis 45 Gew.-% n-Butylacrylat und 0,1 bis 20 Gew.-% einer oder mehreren Verbindungen ausgewählt aus der Gruppe Acrylsäure, Methacrylsäure und Maleinsäureanhydrid, herstellbar ist.

Die Herstellung der letztgenannten Ausführungsformen erfolgt üblicherweise durch radikalische Polymerisation und ist in den Schriften US 2 897 183 und US 5 057 593 beschrieben.

Außerdem sind Copolymere aus Butadien oder substituierten Butadienen mit Styrol, Methylmethacrylat oder Acrylnitril geeignet, beispielsweise Nitrilkautschuk (NBR) oder Styrol-Butadien-Kautschuk (SBR). Die olefinischen Doppelbindungen in diesen Copolymeren können ganz oder teilweise hydriert sein.

Ebenso sind als Komponente C, gegebenenfalls hydrierte oder teilweise hydrierte, Copolymere aus Butadien und Styrol mit Blockstrukturen geeignet. Sie werden bevorzugt nach der Methode der anionischen Polymerisation in Lösung unter Verwendung metallorganischer Verbindungen wie sek.-Butyllithium hergestellt, wobei lineare Blockkautschuke beispielsweise des Aufbaus Styrol/Butadien (Zweiblock) oder Styrol/Butadien/Styrol (Dreiblock) entstehen. Diese Blöcke können von Polymeren mit statistischer Verteilung voneinander getrennt sein, und ferner können die Blöcke auch in untergeordneten Mengen Einheiten des jeweils anderen Monomeren enthalten.

Bei Mitverwendung geringer Mengen eines Ethers, insbesondere Tetrahydrofuran (THF) neben dem Initiator, entstehen Polymerketten, welche, von einem Butadien-reichen Ausgangssegment ausgehend, entlang der Kette einen steigenden Styrolgehalt aufweisen und schließlich in einem Homo-Polystyrol-Endsegment enden. Einzelheiten des Herstellungsverfahrens sind in der DE-A 31 06 959 beschrieben. Auch derart aufgebaute, gegebenenfalls hydrierte oder teilweise hydrierte, Polymere C sind gut geeignet.

Ebenfalls gut geeignet als Komponente C sind Polymere mit sternförmiger Struktur, die man durch Verknüpfung mehrerer Polymerketten, hauptsächlich von Dreiblockpolymerisaten des Typs Styrol/Butadien/Styrol, über polyfunktionelle Moleküle erhält. Geeignete Verknüpfungsmittel sind z.B. Polyepoxide, beispielsweise epoxidiertes Leinsamenöl, Polyisocyanate wie Benzo-1,2,4-triisocyanat, Polyketone wie 1,3,6-Hexantrion und Polyanhydride, außerdem Dicarbonsäureester wie Diethyladipat, sowie Siliciumhalogenide wie SiCl₄, Metallhalogenide wie TiCl₄ und Polyvinylaromaten wie Divinylbenzole. Näheres über die Herstellung dieser Polymeren ist z.B. der DE-A 26 10 068 zu entnehmen.

Neben der Elastomerkomponente A und den Polymeren B und C können die nach dem erfindungsgemäßen Verfahren hergestellten Formmassen als weitere Komponente D Zusatzstoffe, beispielsweise Wachse, Weichmacher, Gleit- und Entformungsmittel, Pigmente, Farbstoffe, Mattierungsmittel, Flammschutzmittel, Antioxidantien, Stabilisatoren gegen Lichteinwirkung und thermische Schädigung, faser- und pulverförmige Füll- und Verstärkungsmittel und Antistatika in den für diese Mittel üblichen Mengen enthalten.

Die Zusatzstoffe D können in reiner Form fest, flüssig oder gasförmig vorliegen, oder bereits als Gemisch der reinen Stoffe miteinander eingesetzt werden. Sie können ebenso in einer Formulierung eingesetzt werden, welche die Dosierung erleichtert, etwa als Lösung, oder als Dispersion (Emulsion oder Suspension). Auch eine Formulierung als Masterbatch, d.h. als konzentrierte Mischung mit einem mit dem Extruderinhalt verträglichen thermoplastischen Polymeren, ist geeignet und in manchen Fällen bevorzugt.

Die Polymeren C und die Zusatzstoffe D können in einem oder mehreren der genannten Extruderabschnitte dem Extruder zugeführt werden. In einer bevorzugten Ausführungsform werden die Komponenten C und D - getrennt von der Elastomerkomponente A und dem thermoplastischen Polymeren B - im Entlüftungsabschnitt 1, im Dosierabschnitt 2, und/oder im Abschnitt 4, in dem das Polymere B dem Extruder zugeführt wird, in den Extruder eingeführt. In einer weiteren bevorzugten Ausführungsform werden die Komponenten C und/oder D im weiteren Abschnitt 7 dem Extruder zugeführt.

Die Bestandteile C und D können in den bzw. die gleichen Abschnitte oder jeweils in verschiedene Extruderabschnitte eindosiert werden, und man kann sowohl C als auch D zu 100 % in einem Abschnitt oder verteilt auf mehrere Abschnitte dem Extruder zuführen.

Die genaue Ausgestaltung der Zufuhr von C und D hängt ab von den erwähnten physikalischen und chemischen Eigenschaften der Komponenten A bis D und deren Mengenverhältnissen. So können beispielsweise Zusatzstoffe D mit geringer thermischer Beständigkeit erst in der Austragszone dem Extruder zugeführt werden, wodurch ein thermischer Abbau der Stoffe D weitgehend verhindert wird.

Die mit dem Verfahren hergestellten thermoplastischen Formmassen können mit den allgemein üblichen Verfahren zu Formkörpern verarbeitet werden. Beispielhaft seien Extrusion (für Rohre, Profile, Fasern, Folien und Platten), Spritzgießen (für Formteile aller Art) sowie Kalandrieren und Walzen (für Platten und Folien) genannt.

Ein wesentlicher Vorteil der erfindungsgemäßen Vorrichtung und des erfindungsgemäßen Verfahrens ist, dass im wesentlichen keine Feinpartikel aus dem Extruder über die Entgasungsöffnungen und/oder Entwässerungsöffnungen austreten..

Weiterhin ist die erfindungsgemäße Vorrichtung technisch erheblich einfacher als die bekannten Vorrichtungen.

Gegenüber den aus dem Stand der Technik bekannten Vorrichtungen hat die erfindungemäße weiterhin den Vorteil dass sie sich wesentlich leichter handhaben lässt, so dass Reinigung und Wechsel sehr schnell erfolgen können.

### Beispiele

### Beispiele:

### Beispiele 1-3

Ein Extruder gemäß dem schematischen Aufbau wie in der Tabelle 1 angegeben, wurde verwendet.

Es wurde ein Polybutylacrylat-g-SAN Pfropfkautschuk mit 38 % Restfeuchte dosiert und mit 193,5 kg Durchsatz extrudiert. Nach der Teilentwässerung in Zone 3 und 4 wurden in Zone 6 und 10 je 65 kg/h SAN-Schmelze zudosiert. Die Entgasungssöffnung in Zone 2 wurde mit den unter a-c bezeichneten Rückhaltevorrichtungen verschlossen. Die Form der Rückhaltevorrichtung entsprach der Schneckenrundung.

Zone 2 Entgasungsöffnung, versehen mit
a) Seihergehäuse, 0,1 mm Schlitzweite
b) einlagiges Siebgewebe, 250 µm Maschenweite
c) 5-lagige Metalldrahtgewebe-Verbundplatte, feinstes Gewebe an der Innenseite mit 250 µm Maschenweite

| | Variante | Ergebnis | Standzeit |
|---|---|---|---|
| 1 *) | a | feine Krümmel werden ausgetragen | ++ |
| 2 *) | b | praktisch kein Krümmelaustrag | - **) |
| 3 | c | kein Kümmelaustrag | ++ |

| | | | |
|---|---|---|---|
| *) zum Vergleich **) Sieb bereits nach kurzer Zeit (ca. 12 min) mechanisch beschädigt. | | | |

### Beispiele 4-8

Ein Extruder gemäß dem schematischen Aufbau wie in der Tabelle 1 angegeben, wurde verwendet. Zwischen Zone 4 und 6, der letzten Abquetschzone und der ersten Schmelzedosierzone wurden seitliche Entgasungsöffnungen in Betrieb genommen.

Es wurde ein Polybutadien-g-SAN-Pfropfkautschuk mit 28 % restfeuchte dosiert. Der Kautschuk wurde teilentwässert und lag als Pulver vor. Die Temperatur betrug ca. 150 °C, so daß vor der Vermischung mit SAN-Schmelze noch Wasser verdampfen konnte. Die Schmelze wurde über Zone 6, gegebenenfalls auch über Zone 10 zugegeben, so daß ein Produkt mit ca. 30 % Kautschuk resultierte. Der Durchsatz an Feuchtkautschuk betrug in einer Einstellung 125 kg/h, in einer weiteren 170 kg/h. Die Extruderdrehzahl betrug 300 UPM.

**Tabelle 1:**

| Beispiel eines schematischen Aufbaus einer Zweischneckenmaschine der Größe ZSK 58 | | | | | |
|---|---|---|---|---|---|
| Zone | Bezeichnung | Öffnungen | Im Normalbetrieb versehen mit | Schnecke | Bemerkungen |
| 1 | Dosierzone | Oben | Dosierwaage | Fördernde Elemente | |
| 2 | Entgasungszone | oben/seitlich | Rückhaltevorrichtung *) | Fördernde Elemente | gewünschtenfalls offen |
| 3 | 1. Abquetschzone | Oben | Rückhalteschnecke | Stauelemente, Förderelemente | |
| 4 | 2. Abquetschzone | Oben | Rückhalteschnecke | Stauelemente, Förderelemente | |
| 5 | Entgasungszone | Oben/seitlich | Rückhaltevorrichtung *) | Förderelemente | gewünschtenfalls offen |
| 6 | 1. Schmelzedosierung | Seitlich | Seitenextruder | Förderelemente, Mischelemente | SAN-Schmelzezufuhr |
| 7 | Plastifizierungszone | Geschlossenes Gehäuse | | Förderelemente, Mischelemente | |
| 8 | Plastifizierungszone | Geschlossenes Gehäuse | | Förderelemente, Mischelemente | |
| 9 | Entgasungszone | oben/seitlich | Rückhaltevorrichtung *) | Förderelemente | gewünschtenfalls offen |
| 10 | 2. Schmelzezufuhr | Seitlich | Seitenextruder | Förderelemente, Mischelemente | Option für 2. Schmelze, Masterbatches, Blendkomponenten |
| 11 | Entgasung | Oben | Rückhaltevorrichtung *) | Förderelemente | |
| 12 | Austragszone | Geschlossenes Gehäuse | | Förderelemente | |
| 13 | Austragszone | Geschlossenes Gehäuse | | Förderelemente | |

| | | | | | |
|---|---|---|---|---|---|
| *) gemäß der Erfindung oder gemäß dem Stand der Technik | | | | | |

**Tabelle 2:**

| Beispiele 4 - 8 | | | | | |
|---|---|---|---|---|---|
| Bspl Nr. | Variante | Austrag: Dampf und Krümmelflug | | | Bemerkungen |
| | | bei | von | | |
| | Abdeckung der Entgasungsöffnungen | 125 kg/h | 170 kg/h | Standzeit | |
| 4 *) | einlagiges Siebgewebe | 0 | - | - | Sieb mech. zerstört |
| 5 *) | gleichlaufende Rückhalteschnecken | ++ | +++ | ++ | |
| 6 *) | gegenlaufende Rückhalteschnecken | + | ++ | ++ | |
| 7 *) | Seihergehäuse, 0,1 mm Schlitzweite | + | ++ | + | muß nach 2 h abgereinigt werden |
| 8 | 5-lagige Metallsiebverbundplatte | 0 | 0 | ++ | - keine Verstopfung nach 8 h - keine Verstopfung beim Wiederanfahren |

| | | | | | |
|---|---|---|---|---|---|
| *) zum Vergleich | | | | | |

### Beispiel 9 und 10

Ein Enxtruder gemäß dem schematischen Aufbau wie Tabelle 1 angegeben wurde verwendet. Nach der ersten Schmelzezufuhr und der Plastifizierzone befand sich in Zone 9 eine Entgasungsöffnung. In die Dosierzone wurden 152 kg/h eines Polybutylacrylat-g-SAN-Pfropfkautschuks mit einer Restfeuchte von 28 % dosiert. Dieser wurde in den Abquetschzonen teilentwässert. In Zone 6 wurden 140 kg/h SAN zudosiert.

| Bspl Nr. | Entgasungsöffnung versehen mit | Austrag Dampf und Krümmelflug |
|---|---|---|
| 9 | gleichlaufenden Rückhalteschnecken | + |
| 10 | erfindungsgemäße Rückhaltevorrichtung | 0 |
| 11 | offen | ++ |

| | | |
|---|---|---|
| *) zum Vergleich | | |

### Definition

- 0 =: kein Krümmelflug
- + =: geringer Krümmelflug
- ++ =: deutlicher Krümmelflug
- +++ =: sehr starker Krümmelflug

### Standzeit

- -: Versuch mußte abgebrochen werden, wegen mechanischen Defekts
- +: Reinigung während des Versuches notwendig
- ++: Keine Beeinträchtigung während des gesamten Versuchslaufes

## Patentansprüche

1. Vorrichtung zum Extrudieren von Thermoplasten, die mindestens einen Dosierabschnitt, einen Plastifizierungsabschnitt, eine Entgasungsöffnung, die eine Aussparung oder Bohrung im Extrudergehäuse ist, sowie eine Austragszone umfasst, **dadurch gekennzeichnet, dass** in mindestens einer Entgasungsöffnung eine Metalldrahtgewebe-Verbundplatte befestigt ist, mit zwei oder mehreren Lagen, wobei sich auf einer grob gewebten, großmaschigen aber mechanisch stabilen Trägerschicht immer engmaschigere Lagen, mit der engmaschigsten Lage auf der produktzugewandten Seite, befinden.

2. Vorrichtung nach Anspruch 1, **dadurch gekennzeichnet, dass** die Metalldrahtgewebe-Verbundplatte 2 bis 30 Lagen aufweist.

3. Vorrichtung nach Anspruch 2, **dadurch gekennzeichnet, dass** die Metalldrahtgewebe-Verbundplatte 2 bis 10 Lagen aufweist.

4. Vorrichtung nach einem der Ansprüche 1 bis 3, **gekennzeichnet durch** eine Maschenweite der engmaschigsten Lage von 1 µm bis 500 µm.

5. Vorrichtung nach einem der Ansprüche 1 bis 4, **dadurch gekennzeichnet, dass** die Vorrichtung mindestens eine Entwässerungsöffnung aufweist, aus der das austretende Wasser teilweise oder vollständig in flüssiger Phase austritt.

6. Vorrichtung nach mindestens einem der Ansprüche 1 bis 5, **dadurch gekennzeichnet, dass** die Vorrichtung stromaufwärts, entgegen der Förderrichtung vor einer ersten Dosiereinrichtung, mindestens eine Entwässerungsöffnung aufweist, die mit einer Metalldrahtgewebe-Verbundplatte, einem Feinlochblech oder einer Schlitzlochblende ausgerüstet ist.

7. Vorrichtung nach mindestens einem der Ansprüche 1 bis 6, **dadurch gekennzeichnet, dass** die Vorrichtung stromabwärts, mit der Förderrichtung nach einer ersten Dosiereinrichtung, mindestens eine Entwässerungsöffnung aufweist, die mit einer Metalldrahtgewebe-Verbundplatte, einem Feinlochblech oder einer Schlitzlochblende ausgerüstet ist.

8. Vorrichtung nach mindestens einem der Ansprüche 1 bis 7, **dadurch gekennzeichnet, dass** die Metalldrahtgewebe-Verbundplatte, das Feinlochblech oder die Schlitzlochblende in einen Rahmen eingefügt und dieser mittels eines Verdrängers an der oder den betreffenden Entgasungs- oder Entwässerungsöffnungen angebracht ist.

9. Vorrichtung nach mindestens einem der Ansprüche 1 bis 8, **dadurch gekennzeichnet, dass** die Metalldrahtgewebre-Verbundplatte, das Feinlochblech oder die Schlitzlochblende klappbar oder mittels eines Bajonettverschlusses an der jeweiligen Öffnung angebracht ist.

10. Vorrichtung nach mindestens einem der Ansprüche 1 bis 9, **dadurch gekennzeichnet, dass** eine Metalldrahtgewebe-Verbundplatte eingesetzt wird.

11. Vorrichtung nach mindestens einem der Ansprüche 1 bis 10, **dadurch gekennzeichnet, dass** man als solche einen Extruder einsetzt mit mindestens zwei gleichsinnig oder gegensinnig rotierenden Schnecken, wobei der Extruder in Förderrichtung (stromabwärts) im wesentlichen aus
- mindestens einem Dosierabschnitt, in den mittels einer Dosiereinrichtung Wasser oder eine andere verdampfbare Flüssigkeit enthaltender Thermoplast dem Extruder zugeführt wird, der gewünschtenfalls mindestens eine Entwässerungsöffnung umfasst, die gewünschtenfalls mit einer Metalldrahtgewebe-Verbundplatte, einem Feinlochblech oder einer Schlitzlochblende ausgerüstet ist,
- gewünschtenfalls mindestens einem der Entwässerung des Thermoplasten dienenden Abquetschabschnitt, der mindestens ein Stauelement, sowie jeweils mindestens eine zugehörige Entwässerungsöffnung enthält, wobei letztere gewünschtenfalls mit einer Metalldrahtgewebe-Verbundplatte, einem Feinlochblech oder einer Schlitzlochblende ausgerüstet ist,
- gewünschtenfalls mindestens einem Zuführabschnitt, in dem weiterer Thermoplast als Schmelze in den Extruder eingeführt wird,
- mindestens einem mit Durchmischungs-, Knet- und/oder anderen Plastifizierungselementen versehenen Plastifizierungsabschnitt,
- mindestens einem mit mindestens einer Entgasungsöffnung versehenen Entgasungsabschnitt, in dem das restliche Wasser als Dampf entfernt wird, wobei mindestens eine der Entgasungsöffnungen mit einer Metalldrahtgewebe-Verbundplatte ausgerüstet ist und
- einer Austragszone (VI)
aufgebaut ist.

12. Vorrichtung nach mindestens einem der Ansprüche 1 bis 11, **dadurch gekennzeichnet, dass** man als solche einen Extruder mit mindestens einem Zuführungsabschnitt verwendet.

13. Vorrichtung nach Anspruch 12, **dadurch gekennzeichnet, dass** man als solche einen Extruder verwendet, der mindestens einen Entgasungsabschnitt aufweist, der vor dem ersten Zuführungsabschnitt angeordnet ist.

14. Vorrichtung nach Anspruch 13, **dadurch gekennzeichnet, dass** man als solche einen Extruder verwendet, der mindestens einen Entgasungsabschnitt aufweist, der dem letzten Plastifizierungsabschnitt folgt.

15. Verfahren zur Herstellung von Thermoplasten in einer Schneckenmaschine unter Entgasung, **dadurch gekennzeichnet, dass** man einen Thermoplasten einer Vorrichtung gemäß mindestens einem der Ansprüche 1 bis 14 zuführt, diesen in der Vorrichtung entgast und anschließend austrägt.

16. Verfahren nach Anspruch 15, **dadurch gekennzeichnet, dass** man einen Thermoplasten aus einer wasserfeuchten, bis zu 90 Gew.-% Restwasser enthaltenden Komponente herstellt, indem man diese Komponente der Vorrichtung gemäß mindestens einem der Ansprüche 1 bis 14 zuführt und gewünschtenfalls mit weiteren Komponenten unter Entgasung und Entwässerung vermischt und anschließend den Thermoplasten austrägt.

17. Verfahren nach mindestens einem der Ansprüche 15 bis 16, **dadurch gekennzeichnet, dass** man schlagzäh modifizierte Thermoplaste oder schlagzäh modifizierte Thermoplaste enthaltende Polymerblends herstellt.

18. Verwendung der Vorrichtung gemäß einem der Ansprüche 1 bis 14 zur Herstellung schlagzäh modifizierter Thermoplaste oder Polymerblends, die schlagzäh modifzierte Thermoplaste enthalten.

## Claims

1. An apparatus intended for extruding thermoplastics comprising at least one metering section, at least one plastification section, at least one devolatilizing vent, which is a cutout or hole in the extruder barrel, and also a discharge zone, wherein in at least one devolatilizing vent there is secured a metal-wire-mesh composite sheet having two or more plies, a coarsely woven backing layer which has a coarse mesh but is mechanically stable supporting plies of increasingly narrow mesh, with the ply having the finest mesh being on the side facing toward the product.

2. The apparatus according to claim 1, wherein the metal-wire-mesh composite sheet has 2 to 30 plies.

3. The apparatus according to claim 2, wherein the metal-wire-mesh composite sheet has 2 to 10 plies.

4. The apparatus according to any one of claims 1 to 3, **characterized by** a mesh width for the ply having the finest mesh in the range from 1 µm to 500 µm.

5. The apparatus according to any one of claims 1 to 4, which has at least one dewatering aperture, some or all of the water discharged from which is discharged in the liquid phase.

6. The apparatus according to at least one of claims 1 to 5, which has, in the upstream direction, prior to a first metering device in a direction opposed to the conveying direction, at least one dewatering aperture which has been equipped with a metal-wire-mesh composite sheet, with a finely perforated metal sheet, or with a slit diaphragm.

7. The apparatus according to at least one of claims 1 to 6, which has, in the downstream direction, after a first metering device in the conveying direction, at least one dewatering aperture which has been equipped with a metal-wire-mesh composite sheet, with a finely perforated metal sheet, or with a slit diaphragm.

8. The apparatus according to at least one of claims 1 to 7, wherein the metal-wire-mesh composite sheet, the finely perforated metal sheet, or the slit diaphragm has been introduced into a frame, which has been attached to the relevant vents or dewatering apertures by means of a cramp.

9. The apparatus according to at least one of claims 1 to 8, wherein the metal-wire-mesh composite sheet, the finely perforated metal sheet, or the slit diaphragm has been attached to the relevant aperture by means of a hinge or by means of a quarter-turn fastener.

10. The apparatus according to at least one of claims 1 to 9, wherein use is made of a metal-wire-mesh composite sheet.

11. The apparatus according to at least one of claims 1 to 10, wherein the extruder used has at least two corotating or counterrotating screws, the extruder being substantially composed of the following in the conveying direction (the downstream direction)
- at least one metering section through which, by means of a metering device, a thermoplastic comprising water or comprising another vaporizable liquid is introduced into the extruder, the metering section comprising, if desired, at least one dewatering aperture which has been equipped, if desired, with a metal-wire-mesh composite sheet, with a finely perforated metal sheet, or with a slit diaphragm,
- if desired, at least one squeeze section which serves for dewatering the thermoplastic and comprises at least one retarding element, and also in each case at least one associated dewatering aperture, where the latter has been equipped, if desired, with a metal-wire-mesh composite sheet, with a finely perforated sheet, or with a slit diaphragm,
- if desired, at least one feed section in which further thermoplastic is introduced as melt into the extruder,
- at least one plastification section provided with mixing, kneading, and/or other plastification elements,
- at least one devolatilization section which has at least one vent and in which the remaining water is removed as vapor, where at least one of the vents has been equipped with a metal-wire-mesh composite sheet, and
- a discharge zone (VI).

12. The apparatus according to at least one of claims 1 to 11, wherein the extruder used is one with at least one feed section.

13. The apparatus according to claim 12, wherein the extruder used is one which has at least one devolatilization section arranged prior to the first feed section.

14. The apparatus according to claim 13, wherein the extruder used is one which has at least one devolatilization section which follows the final plastification section.

15. A process for preparing thermoplastics in an extruder with devolatilization, which comprises introducing a thermoplastic to an apparatus according to at least one of claims 1 to 14, devolatilizing it in the apparatus, and then discharging it.

16. The process according to claim 15, wherein a thermoplastic is prepared from a wet component comprising up to 90% by weight of residual water, by introducing this component into the apparatus according to at least one of claims 1 to 14 and, if desired, mixing it with other components, with devolatilization and dewatering, and then discharging the thermoplastic.

17. The process according to at least one of claims 15 and 16, wherein impact-modified thermoplastics or polymer blends comprising impact-modified thermoplastics are prepared.

18. The use of the apparatus according to at least one of claims 1 to 14 for preparing impact-modified thermoplastics or polymer blends comprising impact-modified thermoplastics.

## Revendications

1. Dispositif pour l'extrusion de composés thermoplastiques, qui comprend au moins un segment de dosage, un segment destiné à la plastification, une ouverture de dégazage qui se présente sous la forme d'un évidement ou d'un alésage dans le boîtier de l'extrudeuse, ainsi qu'une zone d'extraction, **caractérisé en ce qu'**une plaque composite de toile métallique ayant au moins deux couches est fixée dans au moins une ouverture de dégazage, les couches présentant des mailles de plus en plus fines se trouvant sur une couche de support tissée grossièrement, aux mailles de grande taille, mais stable sur le plan mécanique, et la couche ayant les mailles les plus fines étant orientée du côté du produit.

2. Dispositif selon la revendication 1, **caractérisé en ce que** la plaque composite de toile métallique présente 2 à 30 couches.

3. Dispositif selon la revendication 2, **caractérisé en ce que** la plaque composite de toile métallique présente 2 à 10 couches.

4. Dispositif selon l'une quelconque des revendications 1 à 3, **caractérisé en ce que** la couche aux mailles les plus fines présente une taille de mailles de 1 µm à 500 µm.

5. Dispositif selon l'une quelconque des revendications 1 à 4, **caractérisé en ce que** le dispositif présente au moins une ouverture d'évacuation d'eau, par laquelle l'eau qui s'échappe s'évacue partiellement ou complètement à l'état liquide.

6. Dispositif selon au moins l'une quelconque des revendications 1 à 5, **caractérisé en ce que** le dispositif présente en amont, à l'encontre du sens du transport et située avant un premier dispositif de dosage, au moins une ouverture d'évacuation d'eau qui est équipée d'une plaque composite de toile métallique, d'une tôle à fines perforations ou d'un diaphragme à fentes.

7. Dispositif selon au moins l'une quelconque des revendications 1 à 6, **caractérisé en ce que** le dispositif présente en aval, dans le sens du transport et située après un premier dispositif de dosage, au moins une ouverture d'évacuation d'eau qui est équipée d'une plaque composite de toile métallique, d'une tôle à fines perforations ou d'un diaphragme à fentes.

8. Dispositif selon au moins l'une quelconque des revendications 1 à 7, **caractérisé en ce que** la plaque composite de toile métallique, la tôle à fines perforations ou le diaphragme à fentes sont insérés dans un châssis, ce dernier étant installé au moyen d'un organe de refoulement sur la ou les ouvertures de dégazage ou d'évacuation d'eau concernées.

9. Dispositif selon au moins l'une quelconque des revendications 1 à 8, **caractérisé en ce que** la plaque composite de toile métallique, la tôle à fines perforations ou le diaphragme à fentes sont rabattables ou aménagés au moyen d'une fermeture à baïonnette sur l'ouverture respective.

10. Dispositif selon au moins l'une quelconque des revendications 1 à 9, **caractérisé en ce que** l'on utilise une plaque composite de toile métallique.

11. Dispositif selon au moins l'une quelconque des revendications 1 à 10, **caractérisé en ce que** l'on utilise une extrudeuse telle quelle, munie d'au moins deux vis sans fin tournant dans le même sens ou à contre sens, l'extrudeuse étant sensiblement constituée dans le sens du transport (en aval) :
- d'au moins un segment de dosage, dans lequel un dispositif de dosage permet d'alimenter l'extrudeuse en eau ou en composé thermoplastique contenant un autre liquide évaporable, qui comprend éventuellement au moins une ouverture d'évacuation d'eau, laquelle est éventuellement équipée d'une plaque composite de toile métallique, d'une tôle à fines perforations ou d'un diaphragme à fentes,
- éventuellement, d'au moins un segment de compression servant à évacuer l'eau du composé thermoplastique, qui contient au moins un élément de refoulement, ainsi que, respectivement, au moins une ouverture d'évacuation d'eau correspondante, cette dernière étant éventuellement équipée d'une plaque composite de toile métallique, d'une tôle à fines perforations ou d'un diaphragme à fentes,
- éventuellement, d'au moins un segment d'alimentation, dans lequel on introduit un autre composé thermoplastique sous forme de masse fondue dans l'extrudeuse,
- d'au moins un segment de plastification pourvu d'éléments de mélange, de malaxage et/ou d'autres éléments de plastification,
- d'au moins un segment de dégazage pourvu d'au moins une ouverture de dégazage, dans lequel l'eau résiduelle est éliminée à l'état de vapeur, l'une des ouvertures de dégazage au moins étant équipée d'une plaque composite de toile métallique, et
- d'une zone d'extraction (VI).

12. Dispositif selon l'une quelconque des revendications 1 à 11, **caractérisé en ce que** l'on utilise une extrudeuse telle quelle, équipée d'au moins un segment d'alimentation.

13. Dispositif selon la revendication 12, **caractérisé en que** l'on utilise une extrudeuse telle quelle, qui présente au moins un segment de dégazage qui est disposé avant le premier segment d'alimentation.

14. Dispositif selon la revendication 13, **caractérisé en ce que** l'on utilise une extrudeuse telle quelle, qui présente au moins un segment de dégazage disposé à la suite du dernier segment de plastification.

15. Procédé de fabrication de composés thermoplastiques dans une machine à vis sans fin avec dégazage, **caractérisé en ce qu'**un composé thermoplastique est délivré à un dispositif selon au moins l'une quelconque des revendications 1 à 14, que celui-ci est soumis à un dégazage dans le dispositif, puis extrait.

16. Procédé selon la revendication 15, **caractérisé en ce que** l'on fabrique un composé thermoplastique à partir d'un composant humidifié à l'eau, contenant jusqu'à 90 % en poids d'eau résiduelle, dans lequel on délivre ce composant au dispositif selon au moins l'une quelconque des revendications 1 à 14 et, éventuellement, on le mélange à d'autres composants tout en effectuant un dégazage et en évacuant l'eau, puis on extrait le composé thermoplastique.

17. Procédé selon au moins l'une quelconque des revendications 15 à 16, **caractérisé en ce que** l'on fabrique des composés thermoplastiques modifiés en résistance aux chocs, ou des mélanges de polymères contenant des composés thermoplastiques modifiés en résistance aux chocs.

18. Utilisation du dispositif selon l'une quelconque des revendications 1 à 14, pour fabriquer des composés thermoplastiques modifiés en résistance aux chocs ou des mélanges de polymères contenant des composés thermoplastiques modifiés en résistance aux chocs.
